# EUROPÄISCHE PATENTSCHRIFT

(11) **EP 3 915 755 B1**
(45) Veröffentlichungstag und Bekanntmachung des Hinweises auf die Patenterteilung: **20.09.2023**
(21) Anmeldenummer: 21174647.4
(22) Anmeldetag: 19.05.2021
(51) Int. Cl.: B29C 45/76

(54) **MANAGEMENTVERFAHREN UND MANAGEMENTSYSTEM ZUR STEUERUNG EINER GESAMTANLAGE**
MANAGEMENT METHOD AND MANAGEMENT SYSTEM FOR CONTROLLING AN OVERALL SYSTEM
PROCÉDÉ DE GESTION ET SYSTÈME DE GESTION DESTINÉS À LA COMMANDE D'UNE INSTALLATION ENTIÈRE

(30) Priorität: 25.05.2020 DE 102020113879
(43) Veröffentlichungstag der Anmeldung: 01.12.2021
(73) Patentinhaber: Arburg GmbH + Co KG, 72290 Loßburg (DE)
(72) Erfinder: Dr. Duffner, Eberhard, 72181 Starzach (DE); Faulhaber, Werner, 72290 Loßburg Wittendorf (DE)
(74) Vertreter: RPK Patentanwälte Reinhardt und Kaufmann Partnerschaft mbB

(56) Entgegenhaltungen:
- DE-A1-102007 020 184
- DE-A1-102007 052 232
- WINDMANN STEFAN ET AL: "Energy efficiency optimization by automatic coordination of motor speeds in conveying systems", 2015 IEEE INTERNATIONAL CONFERENCE ON INDUSTRIAL TECHNOLOGY (ICIT), IEEE, 17. März 2015 (2015-03-17), Seiten 731-737, XP032785333, DOI: 10.1109/ICIT.2015.7125185

## Beschreibung

Die Erfindung betrifft ein Managementverfahren und ein Managementsystem zur Steuerung und Regelung einer Spritzgießgesamtanlage zur Verarbeitung von Kunststoffen und anderer plastifizierbarer Massen, mit wenigstens zwei vorzugsweise zyklisch arbeitenden, mit einem Zwischenkreis verbundenen Anlagenteilen, insbesondere Anlageteilen für den Kunststoff-Verarbeitungsbereich z.B. einer Spritzgießmaschine zur Verarbeitung von Kunststoffen und anderer plastifizierbarer Massen, deren Peripherie und anderen elektrischen, hydraulischen oder mechanischen Systemen.

Im Rahmen dieser Anmeldung werden die Begriffe "Leistungsbedarf" und "Leistungsrückspeisung" wie folgt verwendet: Der Leistungsbedarf ist die Leistung P, welche z.B. eine Anlage, ein Anlagenteil, eine Maschine, eine Achse und/oder ein Peripheriegerät zum Betrieb für wenigstens eine bestimmte Zeit benötigt. Die Leistungsrückspeisung ist die Leistung P, welche z.B. die Anlage, das Anlagenteil, die Maschine, die Achse und/oder das Peripheriegerät in einen Zwischenkreis, einen Zwischenkreisspeicher und/oder in das Stromnetz für wenigstens eine bestimmte Zeit zurückspeisen kann, weil beispielsweise ein Motor beim Abbremsen generatorisch wirkt. Alternativ zu Leistungsbedarf und/oder Leistungsrückspeisung kann aber auch der Energiebedarf und/oder die Energierückspeisung bzw. der Kraftbedarf und/oder die Kraftrückspeisung betrachtet werden. Diese Bedarfe und Rückspeisungen lassen sich für die jeweilige Anlage, das jeweilige Anlagenteil, die jeweilige Maschine, die jeweilige Achse und/oder das jeweilige Peripheriegerät bei Kenntnis der entsprechenden Parameter ineinander umrechnen. Entsprechend wird ein Leistungs-, Energie- oder Kraftmanagementverfahren und ein Leistungs-, Energie- oder Kraftmanagementsystem offenbart. Prinzipiell ist es auch denkbar, einen Spannungs- bzw. Strombedarf und/oder eine Spannungs- bzw. Stromrückspeisung zu betrachten. Im Folgenden werden die Begriffe Leistungsbedarf und/oder Leistungsrückspeisung verwendet, wobei jedoch immer alle Bedarfe und Rückspeisungen gemeint sind. Entsprechend sind im Rahmen dieser Anmeldung, wenn von "Energie" oder von "Energiespitzen" gesprochen wird, auch immer die "Leistung" bzw. "Leistungsspitzen" und umgekehrt gemeint. Entsprechendes gilt für Kraft, Spannung, Strom.

Unter einer "Achse" werden im Rahmen dieser Anmeldung bewegbare Teile von Maschinen, Anlagen, Anlagenteilen und/oder Peripheriegeräten verstanden, welche sich beispielsweise über einen Antrieb z.B. einen Motor ansteuern lassen. Für das Beispiel einer Spritzgießmaschine wäre eine Achse z.B. die Spindel eines Spindelsystems.

Unter einem "Arbeitsablauf" einer Maschine, einer Gesamtanlage, einer Anlage, eines Anlagenteils und/oder eines Peripheriegerätes werden im Rahmen dieser Anmeldung ein oder mehrere Arbeitsschritte verstanden, welche z.B. von einer Gesamtanlage und/oder einem Anlagenteil zeitlich nacheinander ausgeführt den bevorzugt gesamten Arbeitsablauf ergeben. Z.B. wiederholt sich bei einer zyklisch arbeitenden Maschine, beispielsweise einer Spritzgießmaschine, der Arbeitsablauf von (Arbeits-)Zyklus zu (Arbeits-)Zyklus. Ein Arbeitsablauf kann in einem solchen Fall auch zyklusbezogen sein. Im Beispiel einer Spritzgießmaschine weist ein Arbeitsablauf z.B. das Schließen der Form, das Einspritzen des Kunststoffs, das Aufbringen des Drucks, das Öffnen der Form und/oder das Auswerfen des Formteils auf. Zu einem "Arbeitsablauf" können aber auch die Anfahr- und Beendigungszeiten zu Beginn und Ende eines Produktionsablaufs z.B. von der Einrichtung der Maschine für ein zu fertigendes Teil bis zur Umrüstung für das nächste zu fertigende Teil gehören. Bei einer Anlage kann der Arbeitsablauf auch darin bestehen, dass beispielsweise mehrere Anlagenteile unterschiedliche Arbeitsschritte zum Arbeitsablauf der Anlage beitragen. Beispielsweise kann der Arbeitsablauf einer Anlage folgendermaßen aussehen: Start Anlagenteil 1, Start Anlagenteil 2, Stop Anlagenteil 1, Stop Anlagenteil 2.

Unter einem "Arbeitsablaufparameter" wie z.B. einer Maschine, einer Anlage, eines Anlagenteils oder auch eines Peripheriegeräts werden im Rahmen dieser Anmeldung z.B. eine Geschwindigkeit, eine Kraft, ein Drehmoment, eine Zeit, ein Zeitintervall, eine Dauer, eine Temperatur und/oder ein weiterer den Leistungsbedarf und/oder die Leistungsrückspeisung beeinflussender Parameter verstanden. Mit einem Arbeitsablaufparameter lässt sich zudem eine Maschine, eine Anlage, ein Anlagenteil oder auch ein Peripheriegerät einstellen.

In Industriemaschinen, insbesondere in Kunststoff-verarbeitenden Maschinen z.B. Spritzgießmaschinen, werden dynamische Achsen häufig z.B. über Elektromotoren angesteuert. Hierbei wird unterschieden, ob diese Elektromotoren auf hydraulische Antriebe, z.B. Pumpen-Zylindersysteme und/oder Pumpen-Hydromotor-Systeme, einwirken, mit denen die Achse bewegt wird, oder ob die Elektromotoren direkt bzw. über Getriebe, Riemen und/oder Spindelsysteme Kraft und Bewegung in die Achse einleiten.

Auch wird unterschieden, ob diese Motoren z.B. als Drehstrom-Asynchronmotoren, Synchronmotoren oder als Gleichstrommotoren ausgeführt sind.

Je nach Ausführung sind diese Kunststoff-verarbeitenden Maschinen dann als "elektrische" Maschinen, als "hydraulische" Maschinen oder als "hybride" Maschinen klassifiziert.

Bekannt sind z.B. bei elektrischen Kunststoff-verarbeitenden Maschinen Systeme, bei denen über ein Netzmodul aus dem die Maschine versorgenden Stromnetz, z.B. einem dreiphasigen 400V Drehstromnetz, ein Zwischenkreis mit z.B. nominell 650V DC erzeugt wird. Prinzipiell sind jedoch auch andere Netze, Netztypen, z.B. AC, DC und Spannungen für das Stromnetz und den Zwischenkreis denkbar. Das Drehstromnetz kann selbstverständlich z.B. auch nur einphasig, zweiphasig, mit und ohne Nullleiter sein. Die Spannung kann z.B. je nach Land höher oder niedriger sein. Die Spannung des Zwischenkreises kann selbstverständlich auch deutlich niedriger ausgeführt sein, z.B. 48V DC oder aber auch höher, z.B. 800V DC.

Aus dem Zwischenkreis versorgen sich die achsspezifischen Wechselrichter, die wiederum aus dem Zwischenkreis ein motorspezifisches Drehfeld erzeugen und damit Drehrichtung, Drehzahl und Drehmoment des Achsmotors einstellen. Somit kann jeder Motor und damit auch jede einzelne Achse unabhängig und parallel zu den anderen Achsen geregelt werden. Prinzipiell ist es denkbar, dass auch weitere Systeme wie z.B. Pumpen, Heizungen, Peripheriesysteme und/oder sonstige Systeme der Maschine sich aus dem Zwischenkreis mit Energie versorgen.

Werden z.B. einzelne Achsen abgebremst, so wirken bevorzugt die Motoren generatorisch und können z.B. über einen ansteuernden Wechselrichter Energie in den Zwischenkreis zurückspeisen. Auch ist es möglich, dass die weiteren Systeme Energie in den Zwischenkreis zurückspeisen.

Der Zwischenkreis weist daher bevorzugt Zwischenkreisspeicher, wie z.B. Kondensatoren, Batterien oder sonstige Speichermedien auf. Diese Speicher können Energiespitzen sowohl bei der Entnahme als auch bei der generatorischen Rückspeisung "abpuffern".

Die Zwischenkreisspannung schwankt daher Prinzip-bedingt um ein Toleranzfenster um einen zulässigen Bereich, je nach Ladezustand der Speicher. Wird das Toleranzfenster unterschritten, so muss die benötigte Energie aus dem Stromnetz entnommen werden. Wird zu viel Energie auf einmal zurückgespeist, kann diese nicht gespeichert werden und geht "verloren".

Bekannt sind Systeme, bei denen die Energie in Bremswiderständen in Wärme umgewandelt wird. Diese Energie geht dem System somit "verloren" und muss später wieder über das Stromnetz nachgeführt werden. Ebenfalls bekannt sind jedoch auch Systeme, bei denen mit dieser Energie Verbraucher wie z.B. Heizbänder gespeist werden. So kann die Gesamtenergiebilanz der Maschine verbessert werden. Bekannt sind auch Systeme, bei denen z.B. in KERS-Systemen diese überzählige Energie mechanisch zwischengespeichert werden kann. Aus diesen Speichern kann in der Regel die kinetische Energie über eine Motor-Wechselrichter-Kombination im generatorischen Betrieb dem Zwischenkreis als Energie z.B. elektrische Energie wieder zur Verfügung gestellt werden.

Ein derartiges Verfahren zur Verwertung von Überschuss-Energie ist z.B. aus der DE 10 2013 104 814 A1 bekannt. Zur Verwertung von Überschuss-Energie an einem Umrichter-Zwischenkreis ist für die am Zwischenkreis angeschlossenen Verbraucher eine Konvention vorgesehen, welche überwacht wird. Weiter wird im Zwischenkreis wenigstens ein Verbraucher bzw. ein Leistungssteller verwendet, der auf ein Energieangebot sofort zuverlässig mit einer entsprechenden Last reagiert bzw. der die Energie steuert. Im Zwischenkreis verfügbare Energie soll somit ohne zeitlichen Verzug (sofort zuverlässig) nutzbringend verwertet werden, z.B. durch einen Widerstand einer Plastheizung.

Eine Umformmaschine mit mehreren elektrischen Antrieben von Maschinenachsen ist in DE 10 2010 010 743 A1 offenbart, wobei ein Bediener-Informationssystem zur Ermittlung und zur Ausgabe einer Bedienerinformation zur Optimierung der Arbeitsgeschwindigkeit vorgesehen ist, welches den für die Fertigung erforderlichen Energiebedarf berücksichtigt. Der Bediener soll in die Lage versetzt werden, die Maschine so einzustellen, dass ein unnötiger Verbrauch elektrischer Energie vermieden wird, bzw. die Energieeffizienz des Fertigungsprozesses zu optimieren. Weiter kann ein Zwischenkreis zur Energierückgewinnung verwendet werden, wobei ein Zwischenkreis-Zustandssignal erfasst und verarbeitet wird und die Arbeitsgeschwindigkeit so begrenzt wird, dass der Zwischenkreis im Speicher- und Umverteilungsmodus betrieben wird.

In DE 10 2009 033 228 A1 ist eine Spritzgießmaschine offenbart, wobei ein Teil der elektrischen Verbraucher für einen Generatorbetrieb ausgebildet und mit einem Gleichstromzwischenkreis verbunden ist. Die Maschine ist mit einem Wechselstromnetz verbunden, welches wiederum über einen Gleichrichter mit dem Gleichstromnetz verbunden ist. Bei Bremsvorgängen kann beispielsweise der Zwischenkreis geladen werden. Solange die Spannung des Zwischenkreises über dem Wert des Gleichrichters liegt, wird keine Energie aus dem Wechselstromnetz entnommen; es erfolgt eine Versorgung ausschließlich über den Zwischenkreis.

Ein Verfahren zur Echtzeitbestimmung des Leistungsverlaufs einer Antriebseinrichtung mit mehreren über einen Zwischenkreis verbundenen elektrischen Antrieben ist in der EP 3 255 513 A1 offenbart. Es werden zunächst die Leistungen der Antriebe ermittelt und ein Leistungsbedarf in Abhängigkeit der Summe der ermittelten Antriebsleistungen bestimmt. Der Leistungsbedarf erfolgt in Echtzeit, sodass weitere Optimierungsverfahren zur Minimierung des Leistungsbedarfs angesteuert werden können.

Aus der DE 10 2018 200 360 A1 ist ein Zwischenkreismanagement mit einer Spannungssteuerung bekannt, bei dem zusätzlich zur Zwischenkreis-Kapazitätseinheit mindestens ein zusätzlicher Zwischenkreisspeicher vorhanden ist.

Aus der DE 10 2018 200 017 A1 ist ein Zwischenkreismanagement bekannt, bei dem zusätzlich zur Zwischenkreis-Kapazitätseinheit mindestens zwei zusätzliche, verschiedene Zwischenkreisspeicher mit unterschiedlichen Speichereigenschaften für verschiedene Lastanforderungen vorhanden sind.

Eine dynamische, spannungsgesteuerte Zwischenkreis-Speichereinheit ist in der EP 2 701 299 A1 offenbart.

Z.B. werden in der Solarbranche, im Automotive-Bereich und auch im Maschinenbau als Zwischenkreisspeicher zusätzlich Akkumulatoren in Form von z.B. Blei-, Li-ION-, LI-FE- und/oder Trockenakkumulatoren eingesetzt. Prinzipiell lassen sich jedoch auch weitere Zwischenkreisspeicher nutzen. Mit diesen Akkumulatoren können, über die Zwischenkreisspeicher z.B. Pufferkondensatoren hinaus, höhere und/oder zeitlich länger andauernde Lastspitzen "abgepuffert" werden. Über das Netzmodul muss somit nur eine mittlere benötigte Leistung zur Verfügung gestellt werden.

Ist die zurückgespeiste Lastspitze höher als alle Speichermöglichkeiten im System, dann kann bevorzugt die Energie wieder ins Netz zurückgespeist werden. Dies wird mit sogenannten rückspeisefähigen Netzmodulen realisiert. Die überzählige Energie im Zwischenkreis wird über das Netzmodul entnommen und dem Stromnetz wieder zurückgeführt.

Aus der WO 2009/036755 A2 ist eine Zwischenkreisüberwachung bekannt, welche die Rückspeisung in das Versorgungsnetz abschaltet, wenn sich das Zwischenkreis-Spannungsniveau in einem Fenster von Udcmin < Udc < Udcmax befindet. Sowohl bei der Entnahme aus dem versorgenden Stromnetz als auch bei der Rückspeisung der überzähligen Energie ist es notwendig, dass das Netzmodul die Energie "netzverträglich" entnimmt und rückspeist. Netzverzerrungen, Strom- und Spannungsimpulse müssen auf einem normkonformen Bereich reduziert werden. Dazu werden z.B. Filter und Drosseln eingesetzt, die die getakteten Strom- und Spannungsimpulse glätten und die Verzerrungen minimieren.

Im Maschinenbau wird im Netzmodul als auch in den Wechselrichtern mit Taktfrequenzen von z.B. typisch 8KHz und 16KHz (vereinzelt auch nur mit 4KHz) gearbeitet. Aus der Solarbranche und aus dem Automotive-Bereich sind bereits Netzmodule und auch Wechselrichtermodule im Einsatz, die mit verlustarmen Siliziumkarbid-Leistungshalbleitern mit deutlich höheren Taktfrequenzen arbeiten. In der Solarbranche wird häufig im z.B. 48KHz Bereich getaktet, im Automotive-Bereich geht die Entwicklung in noch höhere Frequenzbereiche. Der Vorteil liegt unter anderem in einer deutlichen Platz- und Kostenreduzierung für die Filter und Drosseln.

Bekannt sind heute bereits Systeme, bei denen in Produktionszellen ein gemeinsamer Zwischenkreis für z.B. eine Kunststoff-verarbeitende Maschine und das zugehörige Robotsystem gebildet wird. Beide Maschinen teilen sich z.B. einen Zwischenkreis, ein Netzmodul mit zugehörigen Filtern und Drosseln und einen Zwischenkreisspeicher. Ebenfalls wird dadurch die Verdrahtung vereinfacht. Somit werden insgesamt Platz und Kosten eingespart. Bei optimaler Auslegung kann die Gesamtenergiebilanz gegenüber einzelversorgten Maschinen verbessert werden.

Diese bekannte Ausführung kann erweitert werden. Hierzu können z.B. mehrere Maschinen und Robots in einer Zelle von einem gemeinsamen Zwischenkreis gespeist werden. Die überzählige Energie wird in Akkus z.B. elektrisch, chemisch und/oder mechanisch gespeichert. Vorteile sind auch hier eine Kosten- und Platzersparnis, eine Verbesserung der Energiebilanz durch deutliche Reduzierung des Gesamtenergiebedarfs und eine Vereinfachung der Verdrahtung. Über eine geeignete Ladeschaltung werden vor Produktionsstart der Zwischenkreis und die angeschlossenen Speicher auf das erforderliche Zwischenkreisniveau geladen.

Denkbar sind auch verschiedene Zellen mit verschiedenen Maschinen, welche über eine Abzweigung auf verschiedene Lastzonen aufgeteilt werden. Jede Lastzone kann über eigene Zwischenkreisspeicher verfügen, die dann geladen werden. Aus der WO 2008/138020 A1 ist ein System bekannt, bei welchem der Typ des Energiespeichers automatisch erkannt wird und der Ladezustand der Zwischenkreisspeicher überwacht wird. Auch ist es möglich, in einen sogenannten Inselbetrieb zu wechseln und die Anlage bei Netzausfall temporär über die Zwischenkreisspeicher zu versorgen.

Aus der WO 2014/198 371 A1 ist eine von außen parametrierbare, parallelschaltbare Energiespeichereinheit bekannt.

In allen vorbeschriebenen Systemen aus mehreren Maschinen und Anlagenteilen mit einem gemeinsamen Zwischenkreis und gegebenenfalls rückspeisefähigen Netzmodulen und Zwischenkreispuffern wird jedoch kein Lastmanagement der einzelnen Verbraucher in Relation zueinander berücksichtigt.

WINDMANN ET AL: "Energy efficiency optimization by automatic coordination of motor speeds in conveying systems", 17. März 2015, und DE 10 2007 020 184 A1 offenbaren Antriebssysteme mit Zwischenkreis, bei denen ein Leistungsfluss zum Netz optimiert wird.

Ausgehend von diesem Stand der Technik liegt der vorliegenden Erfindung die Aufgabe zugrunde, ein Managementverfahren zur Steuerung und/oder Regelung einer Gesamtanlage mit wenigstens zwei vorzugsweise zyklisch arbeitenden, mit einem Zwischenkreis verbundenen Anlagenteilen bereitzustellen, wodurch ein energieoptimierter Betrieb der Anlage gewährleistet ist.

Diese Aufgabe wird durch ein Managementverfahren mit den Merkmalen des Anspruches 1 und durch ein Managementsystem mit den Merkmalen des Anspruches 13 gelöst.

Vorteilhafte Weiterbildungen sind Gegenstand der abhängigen Patentansprüche.

In dem Managementverfahren zur Steuerung und/oder Regelung einer Spritzgießgesamtanlage zur Verarbeitung von Kunststoffen und anderer plastifizierbarer Massen, mit wenigstens zwei vorzugsweise zyklisch arbeitenden, mit einem Zwischenkreis verbundenen Anlageteilen, vorzugsweise Anlageteilen für den Kunststoff-Verarbeitungsbereich z.B. Spritzgießmaschine, Kunststoffverarbeitungsmaschine, 3D-Drucker, Roboter, Trockner, Granulatmühle, wird zunächst der Leistungsbedarf und/oder die Leistungsrückspeisung von wenigstens zwei Anlageteilen ermittelt. Beispielsweise ist es denkbar, dass der Leistungsbedarf und/oder die Leistungsrückspeisung bevorzugt als Verlauf und weiter bevorzugt als zyklischer Verlauf ermittelt wird. Bei der Gesamtanlage kann es sich zum Beispiel um eine Anlage aus dem Kunststoff-Verarbeitungsbereich handeln und bei den verbundenen Anlageteilen beispielsweise um Kunststoffverarbeitungsmaschinen, 3D-Drucker, Roboter, Trockner, Granulatmühlen, Spritzgießmaschinen, deren jeweilige Peripherie sowie Teile davon wie z.B. Motoren, Achsen, Schließeinheit, Formhohlräume, Einspritzeinheit, Fördermittel wie Förderschnecke oder Förderkolben, sowie um andere elektrische, hydraulische und mechanische Maschinen. Die Anlagenteile sind über einen Zwischenkreis miteinander verbunden. Der Zwischenkreis kann beliebig ausgeführt sein, zum Beispiel als DC Zwischenkreis mit einer nominellen

Spannung von zum Beispiel 650 Volt DC. Prinzipiell sind auch andere Netzspannungen des Zwischenkreises denkbar.

Die Ermittlung des Leistungsbedarfs und/oder der Leistungsrückspeisung kann vorzugsweise über wenigstens eine Ermittlungseinheit z.B. über Sensoren und/oder Schnittstellen zum Beispiel über digitale Schnittstellen, wie beispielsweise eine Netzwerkverbindung oder auch über Funk zum Beispiel mittels WLAN oder 5G durchgeführt werden. Beispielsweise ist es auch möglich, die Ermittlung des Leistungsbedarfs und/oder der Leistungsrückspeisung über eine Datei, z.B. in einem Netzwerk oder auf einem Computer zur Verfügung zu stellen. Die Ermittlung kann zum Beispiel in Form einer je nach Arbeitsablauf und/oder Produktionsprozess gestalteten Kurve, zum Beispiel als Energie (E) über Zeit (t) - Kurve = (E(t)), Leistung (P) über Zeit (t) - Kurve = (P(t)), Kraft (F) über Zeit (t) - Kurve = (F(t)), Spannung (U) über Zeit (t) - Kurve = (U(t)) oder Strom (I) über Zeit (t) - Kurve = (I(t)) ausgebildet sein, welche bevorzugt bereits vor einem Arbeitsablauf und/oder eines Produktionsprozess an eine Analyseeinheit z.B. einen Zellenrechner oder eine Maschinensteuerung übertragen wurde oder während eines Arbeitsablaufs und/oder eines Produktionsprozesses mittels der Ermittlungseinheit z.B. mit Sensoren aufgezeichnet wurde. Die Übertragung kann über Schnittstellen bevorzugt über digitale Schnittstellen, z.B. mittels OPC UA, über ein Kabelnetzwerk und/oder Funknetzwerk wie z.B. WLAN und/oder 5G erfolgen. Prinzipiell denkbar ist auch, dass die Ermittlungseinheit mehrere Kurven ermittelt, z.B. E(t), P(t), F(t), U(t) und/oder I(t).

Prinzipiell sind auch andere Formen der Ermittlung denkbar, z.B. dass die Ermittlung so durchgeführt wird, dass entsprechende Informationen aus einer Datenbank z.B. in Form einer Datei, Matrix oder sonstiger Werte abgefragt werden. Auch sind andere Kurven denkbar, beispielsweise eine Kraft (F) über Zeit (t)-Kurve oder über den Weg (s), d.h. z.B. Energie E(s), Leistung P(s), Kraft F(s), Spannung U(s) oder Strom I(s) über den Weg (s) wie z.B. den Schneckenweg einer Förderschnecke. Wenn im Folgenden von einer P(t)-Kurve gesprochen wird, sind auch immer die anderen Kurven z.B. E(t), F(t), U(t), I(t), E(s), P(s), F(s), U(s) und I(s) gemeint.

Bevorzugt können auch einzelne Anlagenteile ihre jeweiligen Leistungsbedarfe und/oder Leistungsrückspeisungen für entsprechende Arbeitsabläufe, wie z.B. dem Arbeitsablauf "Form schließen", der Ermittlungseinheit und/oder der Analyseeinheit bevorzugt automatisch zur Verfügung stellen, beispielsweise über ein Netzwerk.

Die ermittelten Leistungsbedarfe und/oder Leistungsrückspeisungen werden analysiert, bevorzugt von der Analyseeinheit z.B. dem Zellenrechner oder der Maschinensteuerung, indem beispielsweise der Gesamtleistungsbedarf und/oder die Gesamtleistungsrückspeisung der Gesamtanlage zu einem bestimmten Zeitpunkt oder bevorzugt innerhalb wenigstens eines bestimmten Zeitintervalls, beispielsweise während des gesamten Arbeitsablaufes aus den einzelnen Leistungsbedarfen und/oder Leistungsrückspeisungen bestimmt wird. Der Gesamtleistungsbedarf und/oder die Gesamtleistungsrückspeisung setzen sich bevorzugt aus dem Leistungsbedarf und/oder der Leistungsrückspeisung der einzelnen Anlageteile zusammen. Liegt der Gesamtleistungsbedarf und/oder die Gesamtleistungsrückspeisung über wenigstens einem vorgegebenen Wert, werden die Anlagenteile von einer Steuerungs- und Regeleinheit, beispielsweise dem Zellenrechner oder der Maschinensteuerung so gesteuert und/oder geregelt, dass der Gesamtleistungsbedarf und/oder die Gesamtleistungsrückspeisung nicht den wenigstens einen vorgegebenen Wert überschreitet. Dabei kann die Steuerung und/oder Regelung so ausgestaltet sein, dass z.B. eine Achse mit geringerer Geschwindigkeit, Kraft oder Drehmoment betrieben wird, eine Temperatur etwas gesenkt wird oder eine zeitliche Anpassung z.B. eine Verschiebung der Startzeitpunkte der Arbeitsabläufe der Anlagenteile vorgenommen wird.

Prinzipiell ist es auch denkbar, dass eine Kombination von Kurven in der Analyse erfolgt, z.B. als bevorzugt boolesche Verknüpfung verschiedener Werte, Arbeitsablaufparameter und/oder Kurven. So ist es beispielsweise möglich E(t)-, P(t)-, F(t)-, U(t)-, I (t)-, E(s)-, P(s)-, F(s)-, U(s)- und/oder I(s)-Kurven miteinander in der Analyse zu kombinieren. Beispielsweise kann die Analyseeinheit die Kurven ineinander umrechnen, sodass sich beispielsweise ein Gesamtleistungsbedarf errechnen lässt.

Bevorzugt entspricht der vorgegebene Wert beispielsweise der Energie, der Leistung, der Kraft, der Spannung und/oder dem Strom, welche der Zwischenkreis und weiter bevorzugt eventuelle Zwischenkreisspeicher zu einem bestimmten Zeitpunkt oder in einem bestimmten Zeitintervall liefern können. Der vorgegebene Wert hängt somit von der Ausgestaltung des Zwischenkreises ab, welche prinzipiell beliebig sein kann. Prinzipiell kann der vorgegebene Wert auch ein anderer Parameter sein, beispielsweise Kraft, Drehzahl, Drehmoment, Temperatur, Geschwindigkeit oder ein sonstiger Parameter, welcher mit der Leistung verknüpft ist. Auch kann bevorzugt der Bediener den vorgegebenen Wert vorgeben. Übersteigt der Gesamtleistungsbedarf und/oder die Gesamtleistungsrückspeisung den vom Zwischenkreis und den Zwischenkreisspeichern vorgegebenen Wert an wenigstens einer Stelle, wird wenigstens ein Anlagenteil so gesteuert und/oder geregelt, dass der Gesamtleistungsbedarf und/oder die Gesamtleistungsrückspeisung der Gesamtanlage zu wenigstens einem bestimmten Zeitpunkt oder innerhalb wenigstens eines bestimmten Zeitintervalls den vorgegebenen Wert nicht überschreitet. Der Gesamtleistungsbedarf kann so aus dem Zwischenkreis entnommen werden, ohne dass es zu einer Überlastung kommt. Es ergibt sich vorteilhaft ein energieoptimierter Betrieb der Gesamtanlage.

Um vorteilhaft einen energieoptimierten Betrieb der Gesamtanlage zu erzielen, kann bevorzugt der Gesamtleistungsbedarf und/oder die Gesamtleistungsrückspeisung durch Steuerung und/oder Regelung wenigstens eines Anlagenteils so gesteuert und/oder geregelt werden, dass der Gesamtleistungsbedarf und/oder die Gesamtleistungsrückspeisung der Gesamtanlage zu wenigstens einem bestimmten Zeitpunkt oder innerhalb wenigstens eines bestimmten Zeitintervalls kleiner gleich wenigstens einem vorgegebenen Wert, vorzugsweise kleiner gleich einem größten Maximum des Leistungsbedarfs und/oder der Leistungsrückspeisung des Anlagenteils ist, das zu dem wenigstens einem bestimmten Zeitpunkt oder innerhalb des wenigstens einen bestimmten Zeitintervalls das größte Maximum des Leistungsbedarfs und/oder der Leistungsrückspeisung aufweist.

Dabei wird nicht etwa überschüssige Leistung oder Energie abgeführt, beispielsweise indem diese Heizwiderständen zugeführt wird, sondern Leistungs- oder Energiespitzen der Gesamtanlage treten durch eine entsprechende Steuerung und/oder Regelung der Anlagenteile gar nicht auf bzw. sind kleiner gleich dem vorgegebenen Wert, vorzugsweise dem größten Maximum des Leistungsbedarfs und/oder der Leistungsrückspeisung des Anlagenteils, das zu dem wenigstens einem bestimmten Zeitpunkt oder innerhalb des wenigstens einen bestimmten Zeitintervalls das größte Maximum des Leistungsbedarfs und/oder der Leistungsrückspeisung aufweist.

Bevorzugt ist der Gesamtleistungsbedarf und/oder die Gesamtleistungsrückspeisung der Gesamtanlage für eine vorteilhafte erhöhte Energieoptimierung während wenigstens eines gesamten Arbeitsablaufs kleiner gleich dem vorgegebenen Wert, vorzugsweise kleiner gleich dem größten Maximum des Leistungsbedarfs und/oder der Leistungsrückspeisung des Anlagenteils, das während des wenigstens einen gesamten Arbeitsablaufs das größte Maximum aufweist.

Vorteilhaft für eine flexible Optimierung und wenig Steuerungs- und/oder Regelungsaufwand erfolgt die Ermittlung, die Analyse, die Steuerung und/oder die Regelung dezentral.

Die Ermittlung kann neben dem Leistungsbedarf und/oder der Leistungsrückspeisung auch Arbeitsablaufparameter von einzelnen Anlagenteilen und/oder sonstige Parameter z.B. von der Gesamtanlage, von einzelnen Anlagenteilen, des Zwischenkreises, der Zwischenkreisspeicher und/oder des Netzmoduls umfassen. Die Ermittlung wird bevorzugt mit Hilfe von wenigstens einer Ermittlungseinheit z.B. von Sensoren durchgeführt. Eine Übermittlung der ermittelten Informationen erfolgt weiter bevorzugt über Schnittstellen bevorzugt über digitale Schnittstellen, z.B. mittels OPC UA, über ein Kabelnetzwerk und/oder Funknetzwerk wie z.B. WLAN und/oder 5G erfolgen. Prinzipiell ist es auch möglich, dass die Informationen schon der Einheit vorliegen z.B. als Datei oder in einem Netzwerk. Beispielsweise übermitteln einzelne Anlagenteile ihren ermittelten Leistungsbedarf an die Einheit. Dort werden der Leistungsbedarf und/oder die Leistungsrückspeisung, die Arbeitsablaufparameter oder sonstigen Parameter von der Einheit analysiert und je nach Analyseergebnis werden einzelne Anlagenteile von der Einheit gesteuert und/oder geregelt. Beispielweise werden zunächst Leistungsbedarfe und/oder Leistungsrückspeisungen als auch Arbeitsablaufparameter von Anlagenteilen ermittelt und an die Einheit übermittelt. Die Einheit analysiert die Arbeitsablaufparameter von einzelnen Anlagenteilen, die sonstigen Parameter und/oder den Leistungsbedarf und/oder die Leistungsrückspeisung und stellt z.B. fest, dass der vorgegebene Wert überschritten wird, wenn zwei Anlagenteile gleichzeitig ihren Arbeitsablauf starten. Daraufhin steuert und/oder regelt die Einheit eines der Anlagenteile, z.B. indem es eine Pause für das Anlagenteil einfügt, sodass der Gesamtleistungsbedarf nicht den vorgegebenen Wert überschreitet.

Bei einer dezentralen Ermittlung, Analyse, Steuerung und/oder Regelung wird beispielsweise der Leistungsbedarf und/oder die Leistungsrückspeisung, die Arbeitsablaufparameter und/oder die sonstigen Parameter direkt von wenigstens einem Anlagenteil ermittelt und analysiert. Hier können prinzipiell der Leistungsbedarf und/oder die Leistungsrückspeisung, die Arbeitsablaufparameter und/oder die sonstigen Parameter bereits vorliegen, z.B. als Datei und/oder in einem Netzwerk. Bevorzugt stehen die Anlagenteile über Schnittstellen bevorzugt über digitale Schnittstellen, z.B. mittels OPC UA, über ein Kabelnetzwerk und/oder Funknetzwerk wie z.B. WLAN und/oder 5G miteinander in Verbindung. Sie "sprechen" miteinander und tauschen Informationen untereinander aus.

Vorzugsweise können die Leistungsbedarfe und/oder die Leistungsrückspeisungen eines Anlagenteils den anderen Anlagenteilen übermittelt werden, wobei bevorzugt aufgrund der übermittelten Informationen die anderen Anlagenteile sich selbst z.B. leistungs- und/oder energieoptimiert steuern und/oder regeln können. So kann vorteilhaft herausgefunden werden, welches Anlagenteil zu einem bestimmten Zeitpunkt oder in einer bestimmten Zeitspanne am besten gesteuert und/oder geregelt werden muss, um den Gesamtleistungsbedarf und/oder die Gesamtleistungsrückspeisung nicht zu überschreiten. Ergibt beispielsweise das "Gespräch" bzw. erkennt ein Anlagenteil, dass es im zyklischen Arbeitsablauf erhebliche Warte- oder Pausenzeiten hat und dass eine Leistungsspitze auftritt, bei der es selbst Leistungsspitzen mit produziert, aber mit anderen Anlagenteilen nicht in direktem Austausch steht, kann es sich selbständig soweit optimieren und seine Leistungsspitze an dem Zeitpunkt oder in der Zeitspanne reduzieren, wobei die anderen Anlagenteile merken, dass ein Anlagenteil reagiert hat.

Prinzipiell ist es auch möglich, die zentrale Ausgestaltung mit einer dezentralen Ausgestaltung zu koppeln, d.h. ein Teil der Anlage kann dezentral ausgestaltet sein, ist aber ihrerseits wieder ein Teil einer zentral gesteuerten Anlage. Auch der umgekehrte Fall ist denkbar, dass ein zentral gesteuerter Teil der Anlage Teil eines dezentral gesteuerten Teils ist.

Für eine vorteilhaft zielgerichtete Steuerung und/oder Regelung wird die Ermittlung und Analyse durch wenigstens ein Anlagenteil durchgeführt und das Anlagenteil steuert und/oder regelt wenigstens sich selbst. Die Ermittlungs-, die Analyse- und/oder die Steuerungs- und/oder Regeleinheit ist das Anlagenteil selbst, wobei Ermittlung, Analyse und/oder Steuerung und/oder Regelung z.B. von der Maschinensteuerung des Anlagenteils übernommen wird. Vorteilhaft erfolgt so eine adaptive Anpassung an Leistungsspitzen.

Vorzugsweise wird das wenigstens eine Anlagenteil so gesteuert und/oder geregelt, dass der Gesamtleistungsbedarf und/oder die Gesamtleistungsrückspeisung der Gesamtanlage den vorgegebenen Wert während wenigstens eines gesamten Arbeitsablaufs nicht überschreiten. Denkbar ist auch, dass bei zyklisch arbeitenden Anlagenteilen der Gesamtleistungsbedarf und/oder die Gesamtleistungsrückspeisung der Gesamtanlage den vorgegebenen Wert wenigstens während eines gesamten Zyklus nicht überschreiten. Es wird so vorteilhaft verhindert, dass zusätzliche Energie aus dem Stromnetz entnommen werden muss oder dass im Falle der Leistungsrückspeisung nicht genug Kapazitäten im Zwischenkreis vorhanden sind, um die Energie "aufzufangen", wodurch Energie "verloren" ginge.

Bevorzugt wird der Leistungsbedarf und/oder die Leistungsrückspeisung des wenigstens einen Anlagenteils so gesteuert und/oder geregelt, dass der Gesamtleistungsbedarf und/oder die Gesamtleistungsrückspeisung der Gesamtanlage während wenigstens eines gesamten Arbeitsablaufs kleiner gleich dem größten Maximum des Leistungsbedarfs und/oder der Leistungsrückspeisung des wenigstens einen Anlagenteils ist, das während des wenigstens einen gesamten Arbeitsablaufs das größte Maximum des Leistungsbedarfs und/oder der Leistungsrückspeisung aufweist. Vorteilhaft ergibt sich so eine erhöhte Energieoptimierung.

Für eine vorteilhaft effiziente Optimierung des Leistungsbedarfs und/oder der Leistungsrückspeisung erfolgt die Steuerung und/oder Regelung des wenigstens einen Anlageteils bevorzugt über eine Anpassung wenigstens eines Arbeitsablaufs und/oder wenigstens eines Arbeitsablaufparameters des Anlagenteils, wie zum Beispiel einer Geschwindigkeit, einer Kraft, eines Drehmoments, einer Motordrehzahl, einer Temperatur und/oder eines den Leistungsbedarf und/oder die Leistungsrückspeisung beeinflussenden Parameters. Beispielsweise kann die Dosierdrehzahl der Schnecke beim Compoundieren reduziert oder die Temperatur des Formhohlraums auf eine geringere Temperatur eingestellt werden.

Prinzipiell kann bevorzugt ein leistungsintensiver Arbeitsablauf eines Anlagenteils beispielsweise durch einen anderen weniger leistungsintensiven Arbeitsablauf und/oder Arbeitsabläufe ersetzt werden, sodass sich insgesamt ein geringer Gesamtleistungsbedarf ergibt. Beispielsweise ist es möglich, dass voneinander unabhängige Arbeitsabläufe, die keine anderen Arbeitsabläufe beeinträchtigen, an anderer Stelle ausgeführt werden oder dass der Arbeitsablauf abgeändert wird, soweit dies im Produktionsprozess möglich ist, indem beispielsweise eine geringere Motordrehzahl verwendet wird.

Für eine vorteilhaft einfache Steuerung und/oder Regelung der Gesamtanlage erfolgt die Steuerung und/oder Regelung des wenigstens einen Anlagenteils bevorzugt so, dass wenigstens ein Arbeitsablauf des Anlagenteils zeitlich angepasst wird. Prinzipiell ist es denkbar, den Arbeitsablauf zeitlich zu verkürzen und/oder zu verlängern, sodass z.B. zu einem bestimmten Zeitpunkt oder in einem bestimmten Zeitintervall nicht mehrere Anlagenteile gleichzeitig einen hohen Leistungsbedarf benötigen, sodass der Gesamtleistungsbedarf über dem vorgegebenen Wert liegen würde. Beispielsweise kommt es aufgrund von unterschiedlichen Zykluszeiten zwangsläufig zu einem diskontinuierlichen Leistungsbedarf mit Leistungsbedarfsspitzen bei Überlagerungen (Gleichzeitigkeit). Übertragen in das Bild z.B. einer P(t)-Kurve, wird die Kurve eines Anlagenteils hinsichtlich der Zeitachse in wenigstens einem Zeitintervall gedehnt und/oder gestaucht. Der Gleichzeitigkeitsfaktor wird so vorteilhaft reduziert.

Beispielsweise wäre es denkbar, dass im Arbeitsablauf einer Spritzgießmaschine der Formschluss und der dann folgende Druckaufbau der Spritzgießmaschine mehr Zeit benötigt, um so den Leistungsbedarf mehr über die Zeit zu strecken, sodass nicht ein Leistungsbedarfspeak zu einem Zeitpunkt entsteht, an dem bereits mehrere andere Maschinen einen großen Leistungsbedarf haben. Die P(t)-Kurve hätte dann die Form von z.B. P(0,5t) bei der Streckung bzw. von P(2t) bei der Stauchung. Ebenso können die Kurven in wenigstens einem Zeitintervall verschoben, gestaucht und/oder gestreckt werden.

Prinzipiell kann auch durch weitere Maßnahmen eine zeitliche Anpassung des Arbeitsablaufes des Anlagenteils erfolgen. Beispielsweise könnten an bestimmten Stellen in z.B. der E(t) oder P(t)-Kurve Pausen eingeführt werden, ohne den Gesamtzyklus qualitativ zu beeinflussen, sodass sich der Anlagenteil während dieser Zeit in einem "Energiesparmodus" befindet. Weiter bevorzugt erhält im analysierten und optimierten Prozess jeder Anlageteil beeinflussbare Parameter als Einstellparameter, mit welchen es dem Anlagenteil ermöglicht wird, sich spitzenlastkonform zu verhalten.

Um vorteilhaft eine einfache zeitliche Anpassung durchzuführen, erfolgt bevorzugt eine Verschiebung des Startzeitpunktes des Arbeitsablaufes. Weiter bevorzugt erfolgt die Verschiebung des Startzeitpunktes, ohne den Gesamtzyklus qualitativ zu beeinflussen. Prinzipiell kann auch wenigstens ein Zeitintervall verschoben oder mehrere Zeitintervalle können gegenseitig zueinander verschoben, gestaucht und/oder gestreckt werden, ggf. auch innerhalb eines Zyklus. Beispielsweise ist es denkbar, dass bei zwei oder mehreren baugleichen Spritzgießmaschinen, welche z.B. alle den gleichen zyklischen Arbeitsablauf durchführen, der Arbeitsablauf der zweiten Maschine erst nach einer bestimmten Zeit nach Start des Arbeitsablaufes der ersten Maschine gestartet wird, sodass der Gesamtleistungsbedarf der Gesamtanlage in diesem Zeitintervall den vorgegebenen Wert nicht überschreitet. Würden beide Maschinen gleichzeitig gestartet, ergibt sich der Leistungsbedarf und/oder die Leistungsrückspeisung zu jedem Zeitpunkt doppelt. Durch die Verschiebung können die Leistungsbedarfe der Maschinen gegeneinander so verschoben werden, dass beispielsweise dann, wenn die erste Maschine viel Energie benötigt, die andere sich in einem Energiesparmodus befindet, z.B. in einer Wartestellung oder in dieser Zeitspanne Energie zurückspeist. Im Bild von E(t)- oder P(t)-Kurven ergibt die Verschiebung beispielsweise für die Kurve der zweiten Maschine P2(t) sich zu P2(t-x) mit x beliebig, während die Kurve der ersten Maschine P1(t) unverändert bleibt.

Beispielsweise können die Startzeitpunkte von einzelnen Achsbewegungen der Anlagenteile während des Arbeitsablaufs zueinander verschoben werden, ohne den Gesamtzyklus qualitativ zu beeinflussen. Auch denkbar ist die Einfügung von Pausen zwischen entsprechenden Schritten des Arbeitsablaufs. Beispielsweise kann der Auswerfer einer Spritzgießmaschine nicht sofort nach Öffnen der Form aktiviert werden, sondern erst nach einer gewissen Zeitspanne. Insgesamt ergeben sich so bevorzugt ein Gesamtleistungsbedarf und/oder eine Gesamtleistungsrückspeisung der Gesamtanlage, welche vorteilhaft Leistungsbedarfs- und/oder Leistungsrückspeisungsspitzen reduzieren.

Für eine vorteilhaft besonders effektive Energieoptimierung erfolgt bevorzugt die Verschiebung so, dass das globale Maximum des Gesamtleistungsbedarfs und/oder der Gesamtleistungsrückspeisung minimal wird. Bevorzugt werden die Startzeitpunkte der Arbeitsabläufe so zeitlich verschoben, dass der Gesamtleistungsbedarf und/oder die Gesamtleistungsrückspeisung den vorgegebenen Wert bestmöglich unterschreiten. Im Bild der E(t)- oder der P(t)-Kurve würde dies z.B. bedeuten, dass wenigstens eine Kurve eines Anlagenteils so verschoben, gestaucht und/oder gedehnt wird, dass das globale Maximum der addierten Gesamtkurve minimal wird. Bildlich gesprochen wird versucht, die Kurven so zu verschieben, zu stauchen und/oder zu dehnen, um den globalen Maximalwert der y-Achse möglichst klein zu halten. Bevorzugt entspricht der globale Maximalwert der Gesamtkurve dann einem globalen Maximalwert einer Kurve wenigstens eines Anlagenteils. So wird der Zwischenkreis am wenigstens beansprucht und muss lediglich den niedrigstmöglichen Leistungsbedarf bereitstellen bzw. die niedrigstmögliche Leistungsrückspeisung aufnehmen. Vorteilhaft wird dadurch der Zwischenkreis geschont, da nicht eine zu hohe Leistung beansprucht wird.

Um vorteilhaft einen effektiven Produktionsprozess zu erzielen, erfolgt bevorzugt die Minimierung des globalen Maximums des Gesamtleistungsbedarfs und/oder der Gesamtleistungsrückspeisung unter der Randbedingung, dass die Gesamtzeit der Arbeitsabläufe der Gesamtanlage minimal wird. Die Gesamtzeit der Arbeitsabläufe der Gesamtanlage ist die Zeit, zu der alle Anlagenteile ihren Arbeitsablauf oder ihre Arbeitsabläufe ausgeführt haben. Im Bild der E(t)- oder der P(t)-Kurve gesprochen, wird versucht, die Gesamtzeit T in Richtung der x-Achse möglichst klein zu halten, wobei gleichzeitig der globale Maximalwert der y-Achse, also die Energie E oder die Leistung P minimiert wird.

Beispielsweise könnten zwei Anlagenteile nacheinander ihre jeweiligen Arbeitsabläufe ausführen: Anlagenteil 2 startet, wenn Anlagenteil 1 fertig ist. Dies hätte zwar zur Folge, dass der globale Maximalwert der y-Achse so klein wie möglich bleibt, da sich die Arbeitsabläufe der beiden Anlagenteile nicht überlagern können, jedoch würde ein solches Vorgehen eine sehr lange Zeit in Anspruch nehmen. Um vorteilhaft die Zeit zu verkürzen, kann z.B. der Startzeitpunkt des Anlagenteils 2 so verschoben, gestaucht und/oder gedehnt werden, dass der Gesamtleistungsbedarf und/oder die Gesamtleistungsrückspeisung bzw. der globale Maximalwert der y-Achse immer noch so klein wie möglich bleibt, jedoch die Gesamtzeit reduziert wird. Es könnte daher bevorzugt vorkommen, dass sich die Leistungsbedarfe von Anlagenteil 1 und Anlagenteil 2 in einem bestimmten Zeitpunkt oder innerhalb eines bestimmten Zeitintervalls überschneiden, diese sich jedoch nicht so addieren, dass der maximale Gesamtleistungsbedarf bzw. der globale Maximalwert der y-Achse größer ist als der maximale Leistungsbedarf von einem der Anlagenteile. Vorteilhaft wird somit ein schneller Produktionsprozess erzielt, wobei der vorgegebene Wert gleichzeitig nicht überschritten wird und der Zwischenkreis somit nicht überlastet und geschont wird.

Für einen vorteilhaft schnellen Produktionsprozess erfolgt die Verschiebung bevorzugt so, dass die Gesamtzeit der Arbeitsabläufe der Gesamtanlage unter der Randbedingung minimiert wird, dass das globale Maximum des Gesamtleistungsbedarfs und/oder der Gesamtleistungsrückspeisung minimal wird. In diesem Fall wird in erster Linie auf eine kurze Gesamtzeit minimiert. Erst in zweiter Hinsicht soll der Gesamtleistungsbedarfs und/oder die Gesamtleistungsrückspeisung minimiert werden, wobei auch der vorgegebene Wert nicht überschritten werden soll. Es kann hierbei vorkommen, dass der vorgegebene Wert "ausgereizt" wird. Es wird versucht, den Zwischenkreis bis zur Belastungsgrenze auszureizen, jedoch nicht zu überreizen, um so einen möglichst schnellen Produktionsprozess zu erhalten.

Für eine vorteilhaft bedienerfreundliche Ermittlung der Leistungsbedarfe und/oder der Leistungsrückspeisungen erfolgt die Ermittlung weiter online. Online in diesem Zusammenhang bedeutet, dass im laufenden Betrieb der Gesamtanlage bevorzugt in Echtzeit eine E(t) oder eine P(t)-Kurve der einzelnen Anlagenteile aufgenommen und diese im Anschluss zur Analyse der Analyseeinheit z.B. dem Zellenrechner zur Verfügung gestellt wird.

Bevorzugt erfolgt die Ermittlung und/oder die Analyse des Leistungsbedarfs und/oder die Leistungsrückspeisung des wenigstens einen Anlagenteils mittels eines selbstlernenden Algorithmus, z.B. einer künstlichen Intelligenz. Vorteilhaft wird dadurch die Ermittlungs- und/oder die Analysezeit verkürzt, da der Algorithmus bereits bestimmte Situationen im Arbeitsablauf der Anlagenteile erkennt und im Anschluss entsprechend in die Steuerung und/oder Regelung eingreifen kann. Beispielsweise erkennt der Algorithmus bestimmte Situationen anhand der verwendeten Maschinen, des zu produzierenden Formteils, des zu verarbeitenden Materials und/oder der Arbeitsabläufe aus früheren Produktionsprozessen wieder, sodass z.B. eine Analyse viel weniger Zeit in Anspruch nimmt. Beispielsweise fügt der Algorithmus eine Pause in einem bestimmten Zeitintervall ein oder senkt die Temperatur in einem Anlagenteil.

Beispielsweise arbeiten Kunststoffmaschinen in der Regel zyklisch, wobei sich die Zykluszeiten der Prozesse unterschiedlicher Kunststoffmaschinen voneinander unterscheiden und sich nicht ohne weiteres synchronisieren lassen. Die Aufgabe des Algorithmus ist demnach, die Prozesse der in der Gesamtanlage zusammengeschalteten Anlageteile zu beobachten und zu erkennen, wann es z.B. im Gesamtleistungsbedarf und/oder in der Gesamtleistungsrückspeisung zu einem Maximum kommt. Dort addieren sich verschiedene Leistungsbedarfe bzw. Leistungsrückspeisungen zu einem Zeitpunkt zu einem lokalen Maximum. Der Algorithmus kann ein solches Maximum vorhersagen und vermeiden, indem z.B. eine Achsbewegung zeitlich verzögert wird, eine Drehzahl angepasst wird oder eine zeitliche Verschiebung erfolgt. Der Algorithmus beobachtet die Maxima (Leistungsbedarf bzw. Leistungsrückspeisung) der einzelnen Anlagenteile im zeitlichen Bezug zueinander und den Trend, d.h. die zukünftige Entwicklung und kann somit herausfinden, wann sich ein Maximum der Gesamtanlage ergeben wird und wie mit welchem Anlagenteil darauf reagiert werden kann. Z.B. können dem Algorithmus die Leistungsbedarfe und/oder Leistungsrückspeisungen der einzelnen Anlagenteile bereits vor einem ersten Start der Gesamtanlage vorliegen, sodass der Algorithmus Leistungsspitzen identifizieren, analysieren und darauf reagieren kann, indem z.B. einzelne Anlagenteile entsprechend gesteuert und/oder geregelt werden. Ebenfalls denkbar ist, dass die Leistungsbedarfe und/oder Leistungsrückspeisungen der einzelnen Anlagenteile nach einem ersten nicht gesteuerten und/oder geregelten Zyklus zunächst erfasst werden und der Algorithmus daraufhin Anlagenteile für die nächsten Zyklen entsprechend steuert und/oder regelt.

Um vorteilhaft eine schnelle und energieeffiziente Einstellung der Anlagenteile zu erreichen, werden bevorzugt Informationen über den Arbeitsablauf wenigstens eines Anlageteils ermittelt und analysiert und wenigstens einem Anlagenteil wenigstens ein Arbeitsablaufparameterbereich für wenigstens einen Arbeitsablaufparameter zugeordnet, innerhalb dessen sich das Anlagenteil so verhält, dass ein in der Gesamtanlage ablaufender Prozess, z.B. die Herstellung eines Spritzgussteils, durchführbar ist, und der selbstlernende Algorithmus wenigstens ein Anlagenteil so steuert und/oder regelt, indem der Algorithmus wenigstens einen Arbeitsablaufparameter innerhalb des Arbeitsablaufparameterbereichs auswählt.

Ein bestimmter Prozess, welcher in der Gesamtanlage ablaufen soll, ist nicht beliebig veränderbar. Die Anlagenteile bzw. deren Arbeitsabläufe können nicht beliebig geändert werden, da es ansonsten z.B. zu einer schlechten Qualität eines Spritzgussteils kommen kann. Beispielsweise ist für die Qualität eines bestimmten Spritzgussteils zwingend notwendig, einen gewissen Druck aufzubringen. Der Druck benötigt jedoch einen großen Leistungsbedarf. Auch beeinflussen sich bestimmte Ablaufparameter im Hinblick auf den Gesamtleistungsbedarf und/oder die Gesamtleistungsrückspeisung untereinander. Um dem Rechnung zu tragen, werden Informationen über den Arbeitsablauf wenigstens eines Anlagenteils ermittelt und analysiert. Die Informationen können dabei Informationen über das Formteil enthalten sowie über die Charakteristik des Anlagenteils, beispielsweise welche Geschwindigkeiten, Drücke oder welche Temperatur das Anlagenteil aufbringen kann. Danach wird jedem Anlagenteil ein Ablaufparameterbereich zugeordnet, z.B. ein Bereich eines Drucks oder einer Temperatur, innerhalb dessen sich das Anlagenteil so verhält, dass ein in der Gesamtanlage ablaufender Prozess durchführbar ist.

Allgemein ist der Ablaufparameterbereich von Prozess zu Prozess und von Anlagenteil zu Anlagenteil verschieden. Dieser Ablaufparameterbereich kann bei einem bestimmten Prozess an die Ermittlungs-, Analyse- und/oder Steuerungs- und Regeleinheit übermittelt werden z.B. von dem Anlagenteil selbst. Das Anlagenteil hat Kenntnis darüber, in welchem Ablaufparameterbereich es sich bei einem bestimmten Prozess bewegen kann. Prinzipiell kann der Ablaufparameterbereich auch bereits in der Ermittlungs-, Analyse- und/oder in der Steuerungs- und Regeleinheit vorliegen. Der selbstlernende Algorithmus wählt die Ablaufparameter innerhalb des Ablaufparameterbereichs dann aus. Durch die Ablaufparameterbereiche der einzelnen Anlagenteile, welche dem Algorithmus zur Verfügung gestellt werden, wird sozusagen ein Kennfeld eines Prozesses erzeugt, in dem der Algorithmus optimieren kann. Der Algorithmus analysiert, wie der Leistungsbedarf gedeckt werden kann, ohne dass der vorgegebene Wert überschritten wird. Beispielsweise könnte der Algorithmus daraufhin die Drehzahl eines Motors, der für die Schließgeschwindigkeit des Werkzeugs verantwortlich ist, entsprechend mit einer geringeren Drehzahl betreiben, solange die Drehzahl innerhalb des zulässigen Drehzahlbereiches des Anlagenteils für den entsprechenden Prozess liegt. Der Algorithmus ist zudem selbstlernend in dem Sinne, dass er bei Prozessen, bei denen er eine Auswahl getroffen hat, eine Rückmeldung bekommt, ob der Prozess erfolgreich war, und diese Informationen in einem ähnlichen Prozess verwendet.

Weiter bevorzugt kann dem Bediener vor dem Start eines Produktionsprozesses für ein Anlagenteil ein Ablaufparameterbereich für einen Ablaufparameter angezeigt werden. Der Bediener wählt daraufhin einen Wert in dem Bereich aus, wodurch dem Bediener ein nächster Bereich für einen weiteren Einstellparameter angezeigt wird. Dieser neue Bereich berücksichtigt den vorher ausgewählten Wert und/oder weitere bereits ausgewählte Werte eventuell weiterer Anlagenteile. Der Bediener wählt wieder einen Wert aus usw. Vorteilhaft kann so der Produktionsprozess optimiert werden. Am Ende ergibt sich eine Einstellung des Anlagenteils, wobei vom Bediener Vorgaben innerhalb des Bereichs gemacht wurden, sodass insgesamt der Gesamtleistungsbedarf und/oder die Gesamtleistungsrückspeisung der Gesamtanlage zu wenigstens einem bestimmten Zeitpunkt oder innerhalb wenigstens eines bestimmten Zeitintervalls einen (durch den Zwischenkreis) vorgegebenen Wert nicht überschreitet. Prinzipiell kann auch eine Auswähleinheit, z.B. der Zellenrechner die Auswahl eines bestimmten Wertes automatisch vornehmen.

Bevorzugt werden die Ablaufparameter so innerhalb des Arbeitsablaufparameterbereichs ausgewählt, dass der Gesamtleistungsbedarf und/oder die Gesamtleistungsrückspeisung der Gesamtanlage minimiert werden, wodurch vorteilhaft eine Optimierung des Produktionsprozesses erfolgt.

Für eine vorteilhafte Energieoptimierung sowie für eine geringe Leistungsentnahme aus dem Netz wird bevorzugt der Gesamtleistungsbedarf so durch das wenigstens eine Anlagenteil gesteuert und/oder geregelt, dass das wenigstens ein Anlagenteil generatorisch wirkt. Ergibt sich beispielsweise ein sehr hoher Gesamtleistungsbedarf wird ein Anlagenteil in einen generatorischen Betriebsmodus überführt, sodass der Gesamtleistungsbedarf durch die Rückspeisung aus dem Anlagenteil wenigstens zu einem gewissen Teil über den Zwischenkreis gedeckt wird. Prinzipiell ist dies auch im umgekehrten Fall möglich. Wirken beispielsweise mehrere Anlagenteile generatorisch, sodass mehr in den Zwischenkreis zurückgespeist wird, als dieser aufnehmen kann, wird bevorzugt wenigstens ein Anlagenteil so gesteuert und/oder geregelt, dass dieses Anlagenteil motorisch wirkt, also einen Leistungsbedarf und keine Leistungsrückspeisung aufweist. Damit wird vermieden, dass zu viel Leistung in den Zwischenkreis zurückgespeichert wird und somit "verloren" gehen würde.

Idealerweise müsste nach einer Zusammenschaltung mehrerer Anlageteile zu einer Gesamtanlage nie ins Netz zurückgespeist werden und die Leistungsentnahme wäre nahezu kontinuierlich und nicht sprunghaft (Minimierung der Netzrückwirkung). Dazu müsste jedoch ein ausreichend großer Zwischenkreis bzw. Zwischenkreisspeicher zur Verfügung stehen, was jedoch weder technisch noch wirtschaftlich sinnvoll ist.

Die Aufgabe wird zudem von einem Managementsystem nach Anspruch 13 gelöst. Das Managementsystem ist zur Ausführung des oben beschriebenen Energiemanagementverfahrens eingerichtet. Das Managementsystem weist bevorzugt wenigstens eine Ermittlungseinheit, eine Analyseeinheit, und eine Steuerungs- und Regeleinheit auf.

Das Managementsystem ist als ein dezentrales System aufgebaut. In diesem Fall weisen die Anlagenteile jeweils eine Ermittlungseinheit, eine Analyseeinheit und eine Steuerungs- und Regeleinheit auf, sodass die Anlagenteile sich selbst steuern und/oder regeln können. Beispielweise weist das System mehrere Sensoren und Schnittstellen zur Ermittlung des Leistungsbedarfs und/oder der Leistungsrückspeisung wenigstens eines Anlagenteils auf. Weiter bevorzugt weist das Energiemanagementsystem eine Auswähleinheit auf, welche z.B. ebenfalls im Zellenrechner oder in der Maschinensteuerung realisiert ist.

Weitere Vorteile ergeben sich aus den Unteransprüchen und der nachfolgenden Beschreibung eines bevorzugten Ausführungsbeispiels.

Im Folgenden wird die Erfindung anhand eines in den beigefügten Figuren dargestellten Ausführungsbeispiels näher erläutert. Es zeigen:
- Fig. 1: ein Verfahrensablaufdiagramm,
- Fig. 2: Leistungsbedarfskurven zweier Anlageteile,
- Fig. 3: eine Gesamtleistungsbedarfskurve ohne Analyse und/oder Steuerung und Regelung,
- Fig. 4: eine Gesamtleistungsbedarfskurve mit zeitlicher Anpassung,
- Fig. 5 - 7: Gesamtleistungsbedarfskurven mit Verschiebung des Startzeitpunktes,
- Fig. 8a: ein Managementsystem mit zentraler Einheit,
- Fig. 8b: ein Managementsystem ohne zentrale Einheit,
- Fig. 9: einen Vergleich Gesamtleistungsbedarf/Gesamtenergiebedarf.

Die Erfindung wird jetzt beispielhaft unter Bezug auf die beigefügten Zeichnungen näher erläutert.

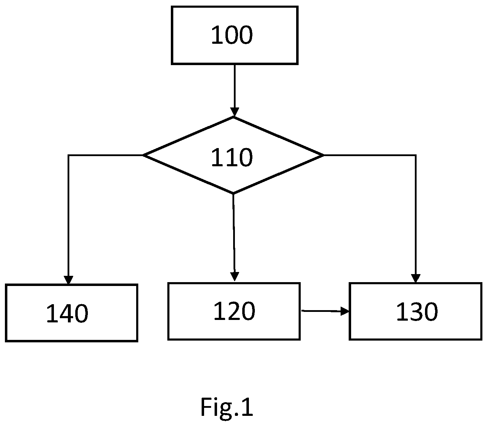

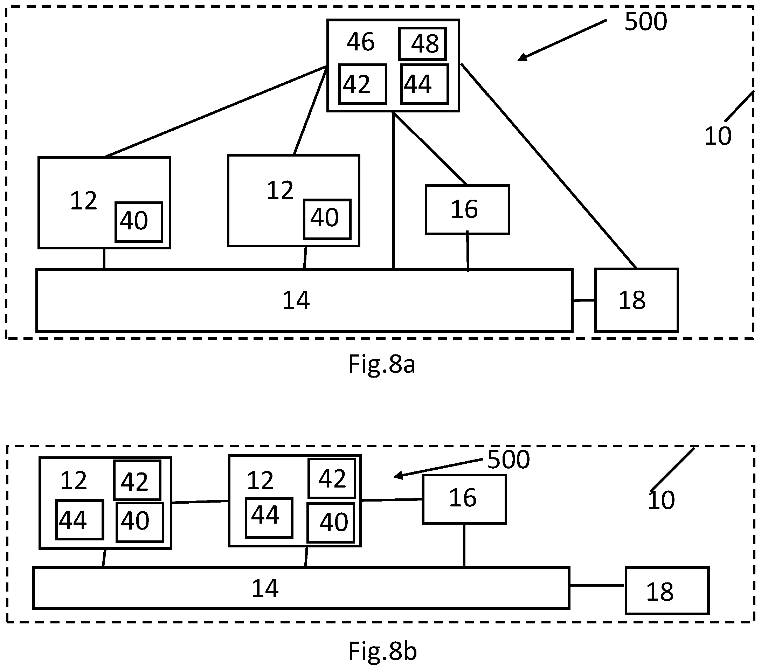

Im Ausführungsbeispiel in Fig. 1 ist in schematischer Form ein Ablaufdiagramm eines Managementverfahrens zur Steuerung und/oder Regelung einer in Fig. 8a und 8b schematisch dargestellten Gesamtanlage 10 mit wenigstens zwei mit einem Zwischenkreis 14 verbundenen Anlagenteilen 12 dargestellt. Zunächst werden in einem ersten Schritt 100 der Leistungsbedarf und/oder die Leistungsrückspeisung von wenigstens zwei Anlageteilen 12 ermittelt. Dies kann beispielsweise über eine vorhandene Datei erfolgen, welche einer Analyseeinheit, z.B. einem Zellenrechner zur Verfügung gestellt wird. In der Datei sind beispielsweise die Leistungsbedarfe und/oder die Leistungsrückspeisungen der einzelnen Anlageteile 12 enthalten. Alternativ und/oder ergänzend können auch z.B. in der Datei Algorithmen zur Ermittlung der Leistungsbedarfe und/oder Leistungsrückspeisungen bereitgestellt werden. Die Ermittlung kann bevorzugt jedoch auch anders erfolgen z.B. während wenigstens eines Arbeitsablaufes der Anlageteile 12, wobei der Leistungsbedarf durch wenigstens eine Ermittlungseinheit z.B. eines Sensors aufgezeichnet und über wenigstens eine Schnittstelle bevorzugt über eine digitale Schnittstelle, z.B. mittels OPC UA, über ein Kabelnetzwerk und/oder Funknetzwerk wie z.B. WLAN und/oder 5G der Analyseeinheit zur Verfügung gestellt wird.

In Schritt 110 analysiert die Analyseeinheit die Leistungsbedarfe und/oder die Leistungsrückspeisungen der Anlagenteile 12 in Relation zueinander. Bevorzugt werden die Leistungsbedarfe und/oder die Leistungsrückspeisungen der Anlagenteile 12 summiert, woraus sich ein Gesamtleistungsbedarf und/oder eine Gesamtleistungsrückspeisung ergeben. Der Gesamtleistungsbedarf und/oder die Gesamtleistungsrückspeisung wird mit wenigstens einem vorgegebenen Wert 24 verglichen, welcher bevorzugt durch den Zwischenkreis 14 und eventuelle Zwischenkreisspeicher 16 vorgegeben wird. Beispielsweise kann der Zwischenkreis 14 eine nominelle Spannung von 650V DC aufweisen, aus welcher sich dann der vorgegebene Wert, beispielsweise als Energie-, Leistungs-, Kraft-, Spannungs- oder Stromwert bestimmt. Die Energie-, Leistungs-, Kraft-, Spannungs- oder Stromwerte lassen sich entsprechend bei bekannten sonstigen Parametern, wie z.B. Weg oder Zeit ineinander umrechnen, sodass beispielsweise ein Leistungsbedarf und/oder eine Leistungsrückspeisung auch mit einem Energiewert, einem Spannungswert, einem Stromwert und/oder einem Kraftwert verglichen werden kann. Auch andere Netztypen und/oder Netzspannungen sind möglich wie z.B. 48V DC oder 800V DC. Bis zu diesem Energie-, Leistungs- oder Kraftwert kann der Zwischenkreis Energie, Leistung bzw. Kraft liefern, ohne dass weitere Energie aus dem Netz benötigt wird.

Ergibt die Analyse, dass der vorgegebene Wert 24 in wenigstens einem bestimmten Zeitpunkt oder innerhalb wenigstens eines bestimmten Zeitintervalls überschritten wird, wird in einem Schritt 120 wenigstens ein Anlagenteil 12 so gesteuert und/oder geregelt, dass der vorgegebene Wert 24 nicht überschritten wird. Bevorzugt gibt die Analyseeinheit in diesem Fall entsprechende Befehle an eine Steuer- und Regeleinheit z.B. den Zellenrechner, welcher dann das Anlagenteil 12 entsprechend in einem Schritt 130 betreibt. Selbstverständlich können auch mehrerer Anlagenteile relativ zueinander energieoptimiert angesteuert und betrieben werden.

Für den Fall, dass die Analyse ergibt, dass wenigstens ein Anlagenteil 12 nicht so gesteuert und/oder geregelt werden kann, dass der vorgegebene Wert 24 nicht überschritten wird, kann bevorzugt dem Bediener in Schritt 140 eine Warnung angezeigt werden, dass der vorgegebene Wert 24 überschritten wird. Prinzipiell ist es bevorzugt möglich, dass in diesem Falle auch ein Anlagenteil 12 nicht betrieben wird, um den vorgegebenen Wert 24 nicht zu überschreiten. Bevorzugt wird dies dem Bediener mitgeteilt, welcher dann wenigstens ein Anlagenteil 12 auswählt, welches nicht betrieben werden soll. Es ist aber auch möglich, dass automatisch ein Anlagenteil 12 ausgewählt und nicht betrieben wird.

Ergibt die Analyse, dass der vorgegebene Wert 24 nicht überschritten wird, kann bevorzugt die Gesamtanlage 10 ohne Eingriff in die Steuerung und/oder die Regelung in Schritt 130 betrieben werden.

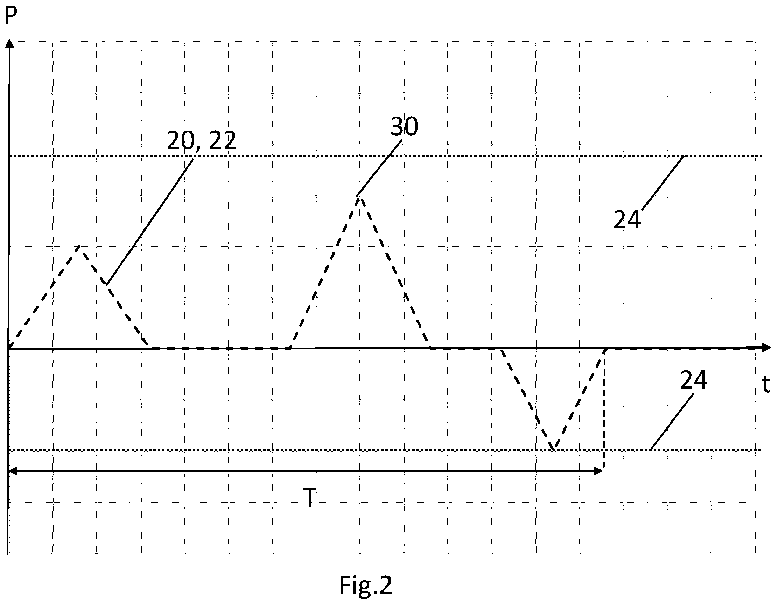

In einem weiteren Ausführungsbeispiel in Fig. 2 ist jeweils eine Leistungsbedarfskurve 20, 22 (P(t)) von zwei Anlagenteilen 12, z.B. von zwei identischen zyklisch arbeitenden Kunststoffverarbeitungsmaschinen dargestellt, welche das gleiche Formteil fertigen sollen und somit den gleichen Arbeitsablauf und die gleiche Leistungsbedarfs- bzw. Leistungsrückspeisungskurve P(t) 20, 22 (im Folgenden "Kurve") aufweisen. Die beiden Kurven 20, 22 liegen direkt übereinander. In Fig. 2 bis 7 und 9 wird in positiver y-Achse Leistung benötigt, in negativer y-Achse wird Leistung zurückgespeist. Zudem ist in Fig. 2 bis 7 und 9 ein Gitternetz zur besseren Übersichtlichkeit eingefügt. Die x-Achse stellt die Zeit t dar. T in Fig. 2 stellt die Zeitspanne der gesamten Arbeitsabläufe der Anlagenteile 12 bzw. die Gesamtzeit der Gesamtanlage 10 dar. In der Zeit T haben alle Anlagenteile 12 ihre Arbeitsabläufe komplett ausgeführt. Da beide Anlagenteile 12 in Fig. 2 gleichzeitig starten und das gleiche Formteil fertigen sollen, entspricht die Zeit T auch der Zykluszeit eines Anlagenteils 12. Prinzipiell sind jedoch auch andere Auftragungen z.B. über den Weg s einer Förderschnecke oder eines anderen Fördermittels denkbar. Da beide Anlagenteile 12 zum gleichen Zeitpunkt gestartet werden, liegen beide Kurven 20, 22 der Anlagenteile 12 zeitlich aufeinander. Der vorgegebene Wert 24 wurde beispielsweise aus dem verwendeten Zwischenkreis 14 ermittelt. Prinzipiell kann der Wert 24 aber auch z.B. durch den Bediener vorgegeben werden. Der Wert 24 kann sich für die positive y-Achse (Leistung wird benötigt) und die negative y-Achse (Leistung wird zurückgespeist) (betragsmäßig) unterscheiden. Im Falle einer Verwendung von nur einem Anlagenteil 12 bzw. bei nur einer Kurve 20 oder 22 überschreitet der Gesamtleistungsbedarf in Fig. 2 nicht den vorgegebenen Wert 24 und die Gesamtanlage 10 kann entsprechend Schritt 130 (Fig. 1) betrieben werden.

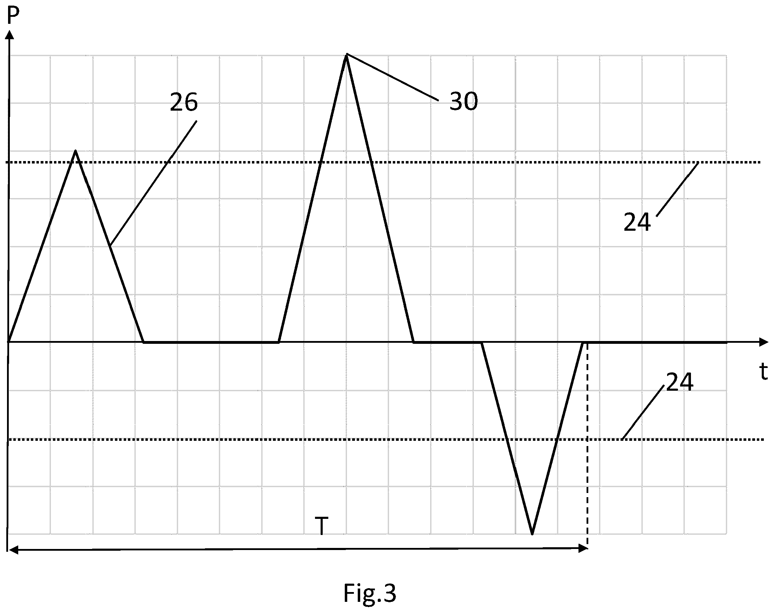

In Fig. 3 ist der Gesamtleistungsbedarf der beiden Anlagenteile 12 mit den Kurven 20 und 22 dargestellt. Die Kurven 20 und 22 wurden in Figur 3 zu einer Gesamtkurve 26 addiert. Eine Analyse, Steuerung und/oder Regelung der Leistungsbedarfe und/oder der Leistungsrückspeisungen der Anlagenteile 12 ist nicht erfolgt. Da beide Anlageteile 12 zum gleichen Zeitpunkt ihren Arbeitsablauf beginnen, beispielsweise mit dem Schließen des Werkzeugs, liegt die Gesamtkurve 26 in wenigstens einem bestimmten Zeitpunkt oder innerhalb wenigstens eines bestimmten Zeitintervalls über dem vorgegebenen Wert 24. In diesem Fall würde die vom Zwischenkreis 14 bereitgestellte Leistung nicht ausreichen, um den Gesamtleistungsbedarf zu decken. Entsprechendes gilt in diesem Ausführungsbeispiel für die Gesamtleistungsrückspeisung. Vielmehr könnte der Zwischenkreis 14 überlastet werden, sodass der Zwischenkreis 14 und/oder ein Anlagenteil 12 geschädigt werden und/oder ausfallen könnten. Bevorzugt kann in einem solchen Fall jedoch vorgesehen sein, dass Energie aus dem Stromnetz nachgeliefert bzw. in das Stromnetz zurückgespeist wird, sodass der Gesamtleistungsbedarf gedeckt ist bzw. die Gesamtleistungsrückspeisung erfolgt.

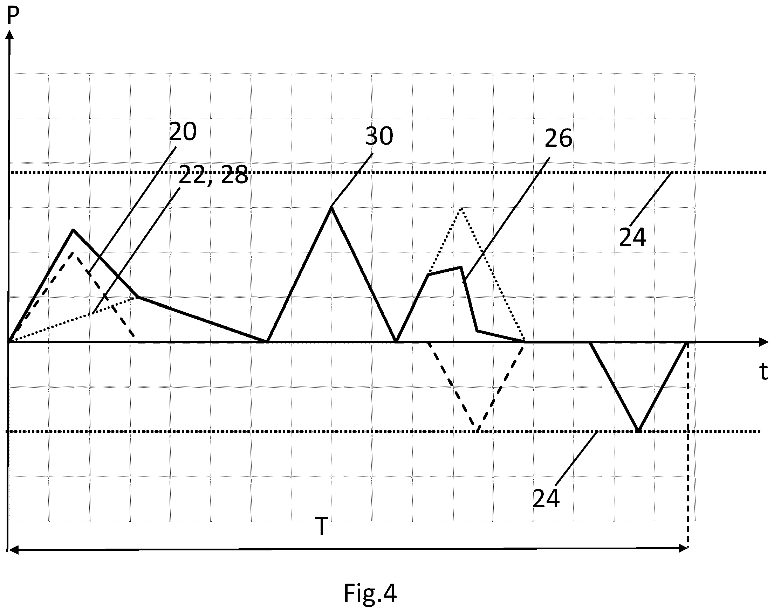

In einem weiteren Ausführungsbeispiel in Fig. 4 erfolgte stattdessen zuvor eine Analyse der Leistungsbedarfe und/oder der Leistungsrückspeisungen der Anlagenteile 12. Ein Anlagenteil 12 wurde daraufhin entsprechend so gesteuert und/oder geregelt, dass der Gesamtleistungsbedarf und/oder die Gesamtleistungsrückspeisung der Gesamtanlage 10 den vorgegebenen Wert 24 während wenigstens eines gesamten Arbeitsablaufs nicht überschreitet. Gemäß Fig. 4 erfolgt die Steuerung und/oder Regelung des wenigstens einen Anlagenteils 12 bevorzugt über eine Anpassung wenigstens eines Arbeitsablaufs und/oder wenigstens eines Arbeitsablaufparameters des Anlagenteils 12, z.B. einer Geschwindigkeit, einer Kraft, eines Drehmoments, einer Temperatur und/oder eines den Leistungsbedarf und/oder die Leistungsrückspeisung beeinflussenden Parameters. Die Anpassung erfolgt z.B., indem die Motordrehzahl eines Spindelmotors gesenkt wurde. Beispielsweise wurde die Kurve 22 in Fig. 4 zu einer gestreckten Kurve 28 gesteuert und/oder geregelt. Die Gesamtzeit T der Gesamtanlage 10 erhöht sich daher im Vergleich zu Fig. 3. Jedoch bleiben Gesamtleistungsbedarf und/oder Gesamtleistungsrückspeisung entsprechend der Gesamtkurve 26 unterhalb des vorgegebenen Werts 24.

In einem weiteren bevorzugten Ausführungsbeispiel wurde wenigstens ein Arbeitsablauf, z.B. das Schließen der Form, in Fig. 4 des Anlagenteils 12 bzw. der Kurve 22 zeitlich angepasst, z.B. etwa um einen Faktor 2 gegenüber der Kurve 20 gedehnt. Beispielsweise kann dies erreicht werden durch eine geringere Geschwindigkeit der Formhälften während des Schließprozesses. Die Gesamtkurve 26 der Gesamtanlage 10 in Fig. 4 überschreitet während wenigstens eines gesamten Arbeitsablaufs nicht den vorgegebenen Wert 24. Der Leistungsbedarf kann folglich komplett mittels des Zwischenkreises 14 gedeckt werden. Eine Überlastung des Zwischenkreises 14 wird somit vorteilhaft vermieden.

In einem weiteren bevorzugten Ausführungsbeispiel ist der Gesamtleistungsbedarf und/oder die Gesamtleistungsrückspeisung kleiner gleich einem größten Maximum des Leistungsbedarfs und/oder der Leistungsrückspeisung des Anlagenteils 12, das zu dem wenigstens einem bestimmten Zeitpunkt oder innerhalb des wenigstens einen bestimmten Zeitintervalls das größte Maximum des Leistungsbedarfs und/oder der Leistungsrückspeisung aufweist. Dies ist ebenfalls in Fig. 4 realisiert. Beispielweise ist der Gesamtleistungsbedarf zu jedem Zeitpunkt kleiner als das größte Maximum des Leistungsbedarfs des Anlagenteils 12 bzw. der Kurven 20 oder 22. Für die Gesamtleistungsrückspeisung gilt dies auch, diese ist zu einem bestimmten Zeitpunkt höchstens gleich dem größten Maximum der Leistungsrückspeisung.

Prinzipiell könnte die zeitliche Anpassung bevorzugt auch über die Einführung von Pausen geschehen. Bei Anlagenteilen 12, welche insbesondere den gleichen (zyklischen) Arbeitsablauf aufweisen, können somit ein hoher Gleichzeitigkeitsfaktor und Leistungsbedarfsspitzen vermieden werden z.B. durch die Einführung von Pausen. Dies kann dadurch erreicht werden, dass z.B. eine Robot-Achse in eine Warteposition gefahren wird, solange eine andere Achse sehr viel Leistung benötigt.

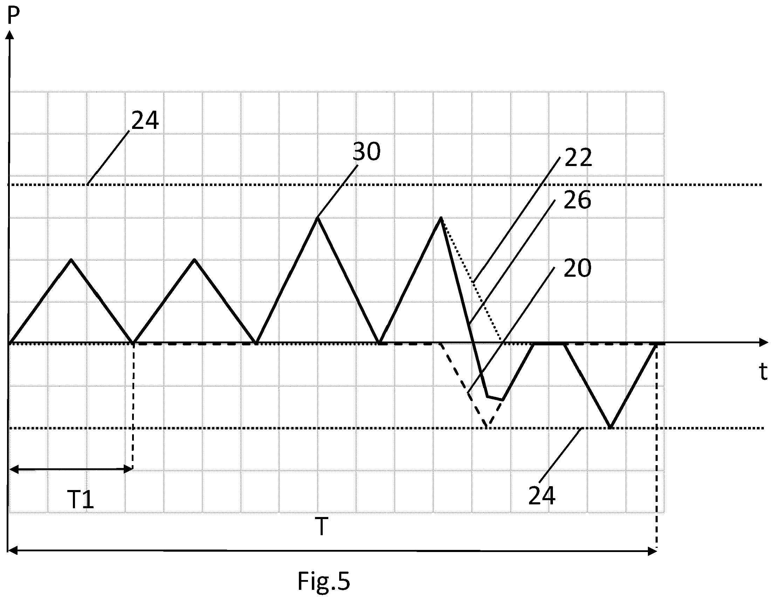

Eine zeitliche Anpassung durch eine Verschiebung des Startzeitpunktes des Arbeitsablaufs ist in einem weiteren Ausführungsbeispiel in Fig. 5 dargestellt. Der Startzeitpunkt der Kurve 22 ist um die Zeitspanne T1 gegenüber Kurve 20 in Fig. 4 verschoben. Bevorzugt erfolgt dies, ohne den Arbeitsablauf qualitativ und/oder quantitativ zu beeinflussen. Das Anlagenteil 12 bzw. die Kurve 22 wurde gegenüber Kurve 20 lediglich in x-Richtung verschoben, ohne dass der Arbeitsablauf des Anlagenteils 12 beeinflusst wurde. Die resultierende Gesamtkurve 26 der Gesamtanlage 10 in Fig. 5 liegt unterhalb des vorgegebenen Wertes 24 bzw. überschreitet diesen nicht. Für den Fall eines zyklisch arbeitenden Anlagenteils 12 wird entsprechend der Gesamtzyklus des Anlagenteils 12, z.B. einer Kunststoffverarbeitungsmaschine qualitativ und/oder quantitativ nicht beeinflusst.

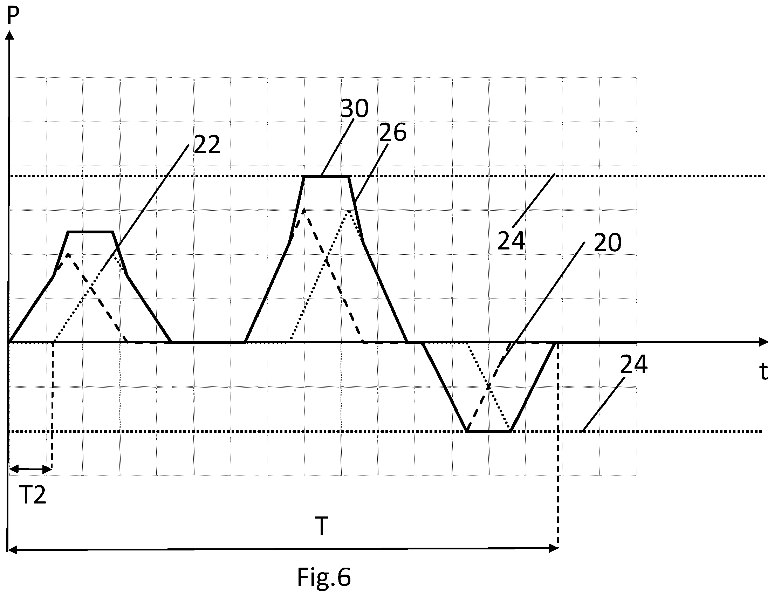

In einem weiteren bevorzugten Ausführungsbeispiel erfolgt die Verschiebung des Startzeitpunktes so, dass das globale Maximum 30 des Gesamtleistungsbedarfs und/oder der Gesamtleistungsrückspeisung minimal wird. Vorteilhaft wird dadurch der Zwischenkreis 14 geschont, da nicht so hohe Energiemengen entnommen werden müssen. Dies ist beispielsweise in Fig. 5 der Fall. Wäre die Kurve 22 in Fig. 5 so verschoben, wie in Fig. 6 dargestellt, würde das globale Maximum 30 der Gesamtkurve 26 zwar den vorgegebenen Wert 24 in Fig. 6 nicht überschreiten, jedoch wäre das globale Maximum 30 nicht minimal wie in Fig. 5. Der maximale y-Wert der Gesamtkurve 26 ist in Fig. 5 geringer als in Fig. 6. Ebenfalls wäre in Fig. 6 der Gesamtleistungsbedarf nicht kleiner gleich dem größten Maximum des Leistungsbedarfs des Anlagenteils 12, das zu wenigstens einem bestimmten Zeitpunkt oder innerhalb wenigstens eines bestimmten Zeitintervalls das größte Maximum des Leistungsbedarfs aufweist. Die Kurven 20 und 22 weisen in einem bestimmten Zeitpunkt bzw. in einem bestimmten Zeitintervall jeweils ein geringeres größtes Maximum des Leistungsbedarfs auf, als der Gesamtleistungsbedarf der Kurve 26. Für die Gesamtleistungsrückspeisung wäre diese Bedingung jedoch erfüllt. Das größte Maximum der Leistungsrückspeisung der Kurven 20 und 22 übersteigt nicht die Gesamtleistungsrückspeisung der Kurve 26.

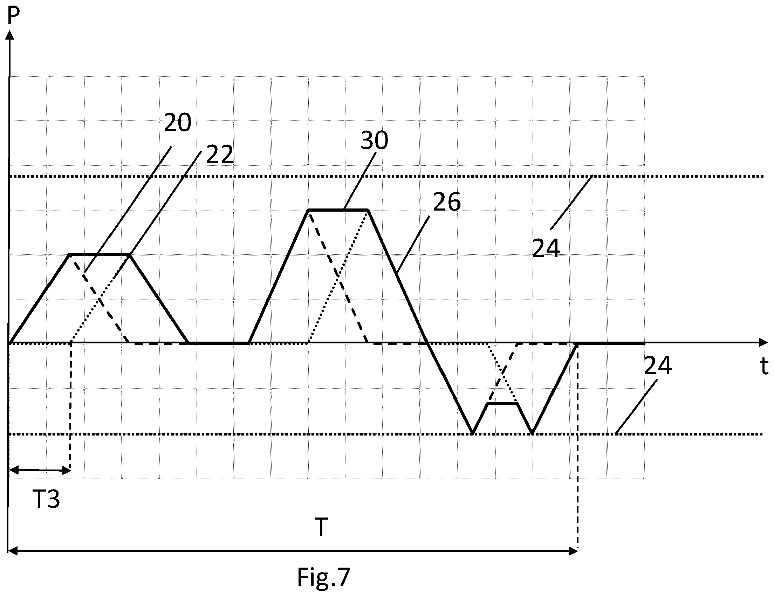

Im Ausführungsbeispiel in Fig. 7 erfolgt bevorzugt die Minimierung des globalen Maximums 30 des Gesamtleistungsbedarfs und/oder der Gesamtleistungsrückspeisung unter der Randbedingung, dass die Gesamtzeit der Arbeitsabläufe der Gesamtanlage 10 minimal ist. Die Kurve 22 wurde gegenüber der Kurve 20 um die Zeitspanne T3 in x-Richtung verschoben. Die Gesamtzeit T in der x-Achse ist in Fig. 7 geringer als in Fig. 5. Der maximale Wert des Gesamtleistungsbedarfs während der Gesamtzeit der Arbeitsabläufe der Gesamtanlage 10 ist in Fig. 7 wie auch in Fig. 5 weiterhin minimal im Gegensatz zu Fig. 6 und überschreitet nicht den vorgegebenen Wert 24, jedoch wird der maximale Wert in Fig. 7 über eine längere Zeit gehalten, sodass die Gesamtdauer T etwas größer ist als in Fig. 6. Im Endeffekt ergibt sich so eine kürzere Gesamtzeit T der Arbeitsabläufe der Gesamtanlage 10 in Fig. 7 gegenüber Fig. 5, wobei vorteilhaft der Zwischenkreis 14 geschont wird. In anderen Worten wird in Fig. 7 zweimal minimiert. Zum einen erfolgt eine Minimierung hinsichtlich des Gesamtleistungsbedarfs und/oder der Gesamtleistungsrückspeisung. Zum anderen erfolgt eine zweite Minimierung unter Beibehaltung der ersten Minimierung dahingehend, dass auch die Gesamtzeit T minimiert wird.

Prinzipiell ist auch eine andere ("umgekehrte") Minimierung in einem weiteren Ausführungsbeispiel denkbar. Es erfolgt die Verschiebung der Startzeitpunkte so, dass die Gesamtzeit T der Gesamtanlage 10 minimiert wird, wobei als Randbedingung der Gesamtleistungsbedarf und/oder die Gesamtleistungsrückspeisung minimal wird. Der Gesamtleistungsbedarf und/oder die Gesamtleistungsrückspeisung überschreitet jedoch nicht den vorgegebenen Wert 24. Dies entspräche z.B. einer Verschiebung der Kurve 22 gegenüber der Kurve 20 in Richtung der x-Achse um T2 in Fig. 6. Dort ist die Gesamtdauer T im Vergleich zu Fig. 5 und 7 am kleinsten und der Gesamtleistungsbedarf und/oder die Gesamtleistungsrückspeisung überschreitet dennoch nicht den vorgegebenen Wert 24.

Wenn in diesen Beispielen von einer zeitlichen Anpassung die Rede ist, kann es sich dabei z.B. um einen zeitlichen Versatz und/oder um Pausen von z.B. einer oder mehreren Zehntelsekunden bis zu mehreren Sekunden und je nach Einsatzbereich auch Minuten handeln.

Die Ermittlung und/oder die Analyse des Leistungsbedarfs und/oder der Leistungsrückspeisung der einzelnen Anlageteile 12 erfolgt online z.B. im laufenden Betrieb der Gesamtanlage 10 in Echtzeit. Beispielsweise kann zunächst der Leistungsbedarf und/oder die Leistungsrückspeisung der Anlageteile 12 im laufenden Betrieb ermittelt und dann gespeichert werden, sodass diese später offline ermittelt werden können.

Der Leistungsbedarf und/oder die Leistungsrückspeisung des wenigstens einen Anlagenteils 12 wird in einem weiteren Ausführungsbeispiel mittels eines selbstlernenden Algorithmus, z.B. einer künstlichen Intelligenz oder eines neuralen Netzwerkes analysiert. Beispielsweise erfolgt in einem Zellenrechner durch Korrelation der einzelnen Leistungsbedarfe der einzelnen Anlagenteile 12 und des selbstlernenden Algorithmus eine Vorhersage der Leistungsbedarfsspitzen, welche dann zur Vermeidung einer Überschreitung des vorgegebenen Wertes 24 gesteuert und/oder geregelt werden können. Vorteilhaft ergibt sich so eine schnellere Analysezeit, da der Algorithmus bestimmte Situationen bereits aus früheren Analysen kennt.

In einem weiteren bevorzugten Ausführungsbeispiel werden Informationen über den Arbeitsablauf wenigstens eines Anlageteils 12 ermittelt und analysiert und es wird wenigstens einem Anlagenteil 12 wenigstens ein Arbeitsablaufparameterbereich für wenigstens einen Arbeitsablaufparameter zugeordnet, innerhalb dessen sich das Anlagenteil 12 so verhält, dass ein in der Gesamtanlage 10 ablaufender Prozess durchführbar ist, und der selbstlernende Algorithmus wenigstens ein Anlagenteil 12 so steuert und/oder regelt, indem der Algorithmus wenigstens einen Arbeitsablaufparameter innerhalb des Arbeitsablaufparameterbereichs auswählt. Die Informationen können z.B. Informationen über das Formteil oder das zu verarbeitende Material enthalten sowie über die Charakteristik des Anlagenteils 12, beispielsweise welche Geschwindigkeiten, Drücke oder welche Temperatur das Anlagenteil aufbringen kann.

Im Ausführungsbeispiel in Fig. 8a ist ein Managementsystem 500 zur Steuerung und/oder Regelung einer Gesamtanlage 10 mit wenigstens zwei mit einem Zwischenkreis 14 verbundenen Anlagenteilen 12 dargestellt. Weiter ist in Fig. 8a ein Zwischenkreisspeicher 16 sowie ein Netzmodul 18 mit dem Zwischenkreis 14 verbunden. Das Managementsystem 500 ist zur Ausführung eines oben beschriebenen Managementverfahrens eingerichtet. Das Managementsystem 500 in Fig. 8a weist wenigstens eine Ermittlungseinheit 40, welche im Ausführungsbeispiel in Fig. 8 beispielsweise als ein Sensor eines Anlagenteils 12 ausgeführt ist, eine Analyseeinheit 42 und eine Steuerungs- und/oder Regelungseinheit 44 auf, wobei bevorzugt die Analyse- 42 und die Steuerungs- und/oder Regelungseinheit 44 als eine zentrale Einheit 46 ausgebildet sein können, z.B. als ein Zellenrechner oder eine Maschinensteuerung.

Weiter bevorzugt weist das Managementsystem 500 in Fig. 8a eine Auswähleinheit 48 auf, welche z.B. ebenfalls im Zellenrechner oder in der Maschinensteuerung realisiert sein kann. Beispielsweise kann das Managementsystem 500 wenigstens einen Sensor und einen Zellenrechner aufweisen, welcher zum Ermitteln des Leistungsbedarfs und/oder der Leistungsrückspeisung der Anlagenteile 12 bzw. zur Analyse dient. Das Managementsystem 500, insbesondere der Zellenrechner oder die Maschinensteuerung kann z.B. als ein Touchscreen zur Interaktion mit dem Bediener eingerichtet sein, auf dem dem Bediener die E(t)-Kurven und/oder P(t)-Kurven anzeigt werden und der Bediener Einstellungen, insbesondere zur Steuerung und/oder Regelung der Anlagenteile 12 vornehmen kann.

Die Ermittlungseinheit 40 wenigstens eines Anlagenteils 12 ermittelt den Leistungsbedarf und/oder die Leistungsrückspeisung des Anlagenteils 12 und übermittelt diese Information an die Analyseeinheit 42. Nach entsprechender Analyse steuert und/oder regelt für den Fall, dass der Gesamtleistungsbedarf und/oder die Gesamtleistungsrückspeisung den vorgegebenen Wert 24 überschreitet, die Steuerungs- und Regelungseinheit 44 wenigstens ein Anlagenteil 12 so, dass der Gesamtleistungsbedarf und/oder eine Gesamtleistungsrückspeisung der Gesamtanlage 10 zu wenigstens einem bestimmten Zeitpunkt oder innerhalb wenigstens eines bestimmten Zeitintervalls den vorgegebenen Wert 24 nicht überschreitet.

In einem weiteren bevorzugten Ausführungsbeispiel in Fig. 8b weist das Managementsystem 500 keine zentrale Einheit 46 auf. Die Ermittlungseinheit 40 ist wie auch in Fig. 8a als ein Sensor der Anlagenteile 12 ausgeführt, wobei die Anlagenteile 12 in Fig. 8b jeweils eine eigene Analyseeinheit 42 und eine Steuerungs- und/oder Regelungseinheit 44 aufweisen, sodass sich die Anlagenteile 12 dezentral selbst steuern und/oder regeln können. Die Ermittlungseinheiten 40 ermitteln die Leistungsbedarfe und/oder die Leistungsrückspeisungen der Anlagenteile 12. Die Anlagenteile 12 können diese Informationen untereinander austauschen und haben zudem Informationen über den Zwischenkreis 14 sowie über eventuelle Zwischenkreisspeicher 16. Die Anlagenteile 12 können mit Hilfe der Analyseeinheit 42 die Leistungsbedarfe und/oder die Leistungsrückspeisungen der Anlagenteile 12 analysieren und, falls der Gesamtleistungsbedarf und/oder die Gesamtleistungsrückspeisung den vorgegebenen Wert 24 überschreitet, sich mittels der Steuerungs- und/oder Regelungseinheit 44 selbst so steuern und/oder regeln, dass der Gesamtleistungsbedarf und/oder eine Gesamtleistungsrückspeisung der Gesamtanlage 10 zu wenigstens einem bestimmten Zeitpunkt oder innerhalb wenigstens eines bestimmten Zeitintervalls den vorgegebenen Wert 24 nicht überschreitet.

Grundsätzlich ist es auch möglich, die zentrale Ausgestaltung gemäß Fig. 8a mit einer dezentralen Ausgestaltung gemäß Fig. 8b zu koppeln, d.h. ein Teil der Anlage kann dezentral ausgestaltet sein, ist aber ihrerseits wieder ein Teil einer zentral gesteuerten Anlage.

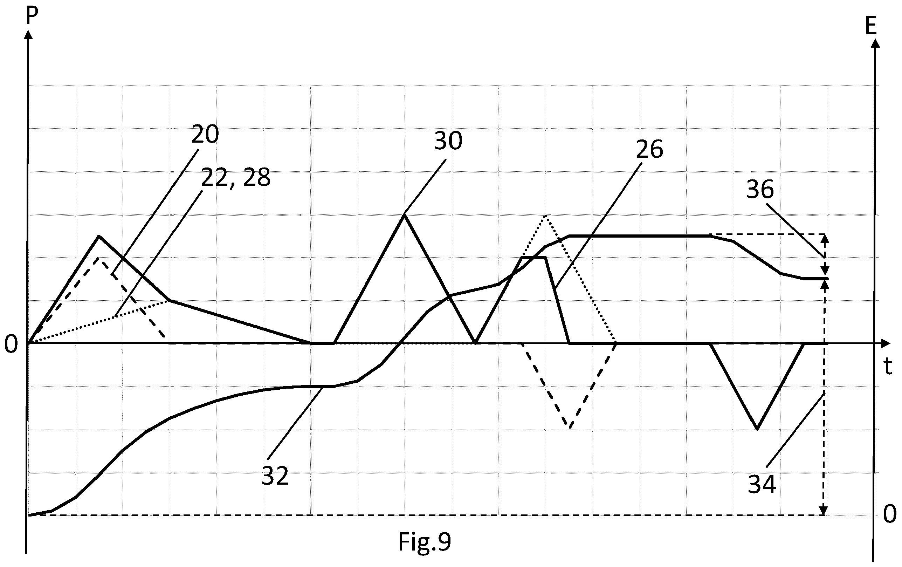

Um die Größen Leistung und Energie zu verdeutlichen, wurde in Fig. 9 die sich aus der Addition der (Leistungs-)Kurven 20 und 22 bzw. 28 ergebende (Leistungs-)Gesamtkurve 26 integriert, wodurch sich die (Energie-)Kurve 32 ergibt. Die Kurve 32 entspricht der Energie, welche zum Betreiben der Anlagenteile 12 benötigt wird. Die Kurve 32 steigt zunächst kontinuierlich an, da Energie benötigt wird, und sinkt gegen Ende aufgrund der Rückspeisung etwas ab, sodass sich ein Energiebedarf 34 und eine Energierückspeisung 36 ergibt.

In Fig. 9 ist weiter zu erkennen, dass die Addition der Leistungsbedarfe der Anlagenteile 12 bzw. der Kurven 20 und 22 zu bestimmten Zeitpunkten kleiner ist als das Maximum des Leistungsbedarfs der Kurve 20. Zu bestimmten Zeiten speisen die Anlagenteile 12 in den Zwischenkreis 14 zurück, da diese generatorisch wirken. Beispielsweise kann der Leistungsbedarf der Kurve 22 aus der Leistungsrückspeisung der Kurve 20 zu einem bestimmten Zeitpunkt über den Zwischenkreis 14 zumindest teilweise oder sogar ganz gedeckt werden.

### Bezugszeichenliste

- 10: Gesamtanlage
- 12: Anlageteil
- 14: Zwischenkreis
- 16: Zwischenkreisspeicher
- 18: Netzmodul
- 20: Kurve
- 22: Kurve
- 24: Wert
- 26: Gesamtkurve
- 28: Kurve
- 30: globales Maximum
- 32: Kurve
- 34: Energiebedarf
- 36: Energierückspeisung
- 40: Ermittlungseinheit
- 42: Analyseeinheit
- 44: Steuerungs- und/oder Regelungseinheit
- 46: zentrale Einheit
- 48: Auswähleinheit
- 100: Schritt
- 110: Schritt
- 120: Schritt
- 130: Schritt
- 140: Schritt
- 500: Energiemanagementsystem

## Patentansprüche

1. Managementverfahren zur Steuerung und/oder Regelung einer Spritzgießgesamtanlage zur Verarbeitung von Kunststoffen und anderer plastifizierbarer Massen mit wenigstens zwei mit einem Zwischenkreis (14) verbundenen Anlagenteilen (12), die jeweils einen Leistungsbedarf und/oder eine Leistungsrückspeisung aufweisen, die miteinander aufsummiert einen Gesamtleistungsbedarf und/oder eine Gesamtleistungsrückspeisung der Gesamtanlage (10) ergeben, wobei der Leistungsbedarf und/oder die Leistungsrückspeisung von wenigstens zwei Anlageteilen (12) ermittelt und in Relation zueinander analysiert werden und daraufhin der Gesamtleistungsbedarf und/oder die Gesamtleistungsrückspeisung durch Steuerung und/oder Regelung wenigstens eines Anlagenteils (12) so gesteuert und/oder geregelt werden, dass der Gesamtleistungsbedarf und/oder die Gesamtleistungsrückspeisung der Gesamtanlage (10) zu wenigstens einem bestimmten Zeitpunkt oder innerhalb wenigstens eines bestimmten Zeitintervalls kleiner gleich wenigstens einem vorgegebenen Wert (24), vorzugsweise kleiner gleich einem größten Maximum des Leistungsbedarfs und/oder der Leistungsrückspeisung des Anlagenteils (12) ist, das zu dem wenigstens einem bestimmten Zeitpunkt oder innerhalb des wenigstens einen bestimmten Zeitintervalls das größte Maximum des Leistungsbedarfs und/oder der Leistungsrückspeisung aufweist, wobei die Ermittlung, die Analyse, die Steuerung und/oder die Regelung durch wenigstens ein Anlagenteil (12) durchgeführt wird und wobei das wenigstens eine Anlagenteil (12) wenigstens sich selbst steuert und/oder regelt, und wobei dass die Ermittlung der Leistungsbedarfe und/oder der Leistungsrückspeisungen online erfolgt.

2. Managementverfahren nach Anspruch 1, **dadurch gekennzeichnet, dass** der Gesamtleistungsbedarf und/oder die Gesamtleistungsrückspeisung der Gesamtanlage (10) während wenigstens eines gesamten Arbeitsablaufs kleiner gleich dem vorgegebenen Wert (24), vorzugsweise kleiner gleich dem größten Maximum des Leistungsbedarfs und/oder der Leistungsrückspeisung des Anlagenteils (12) ist, das während des wenigstens einen gesamten Arbeitsablaufs das größte Maximum des Leistungsbedarfs und/oder der Leistungsrückspeisung aufweist.

3. Managementverfahren nach Anspruch 1 oder 2, **dadurch gekennzeichnet, dass** der Leistungsbedarf und/oder die Leistungsrückspeisung des wenigstens einen Anlagenteils (12) so gesteuert und/oder geregelt wird, dass der Gesamtleistungsbedarf und/oder die Gesamtleistungsrückspeisung der Gesamtanlage (10) während wenigstens eines gesamten Arbeitsablaufs kleiner gleich dem größten Maximum des Leistungsbedarfs und/oder der Leistungsrückspeisung des wenigstens einen Anlagenteils (12) ist, das während des wenigstens einen gesamten Arbeitsablaufs das größte Maximum des Leistungsbedarfs und/oder der Leistungsrückspeisung aufweist.

4. Managementverfahren nach einem der vorhergehenden Ansprüche, **dadurch gekennzeichnet, dass** die Steuerung und/oder Regelung des Gesamtleistungsbedarfs und/oder der Gesamtleistungsrückspeisung durch Steuerung und/oder Regelung des wenigstens einen Anlagenteils (12) über eine Anpassung wenigstens eines Arbeitsablaufs und/oder wenigstens eines Arbeitsablaufparameters des wenigstens einen Anlagenteils (12) erfolgt.

5. Managementverfahren nach einem der vorhergehenden Ansprüche, **dadurch gekennzeichnet, dass** der Gesamtleistungsbedarf und/oder die Gesamtleistungsrückspeisung durch Steuerung und/oder Regelung des wenigstens eines Anlagenteils (12) so gesteuert und/oder geregelt werden, dass wenigstens ein Arbeitsablauf des wenigstens einen Anlagenteils (12) zeitlich angepasst wird.

6. Managementverfahren nach Anspruch 5, **dadurch gekennzeichnet, dass** die zeitliche Anpassung durch eine Verschiebung des Startzeitpunktes des Arbeitsablaufs erfolgt.

7. Managementverfahren nach Anspruch 6, **dadurch gekennzeichnet, dass** die Verschiebung so erfolgt, dass ein globales Maximum (30) des Gesamtleistungsbedarfs und/oder der Gesamtleistungsrückspeisung minimal wird.

8. Managementverfahren nach Anspruch 7, **dadurch gekennzeichnet, dass** die Minimierung des globalen Maximums (30) des Gesamtleistungsbedarfs und/oder der Gesamtleistungsrückspeisung unter der Randbedingung erfolgt, dass die Gesamtzeit der Arbeitsabläufe der Anlagenteile (12) und/oder der Gesamtanlage (10) minimal wird.

9. Managementverfahren nach einem der Ansprüche 6 bis 8, **dadurch gekennzeichnet, dass** die Verschiebung so erfolgt, dass die Gesamtzeit der Arbeitsabläufe der Anlagenteile (12) und/oder der Gesamtanlage (10) unter der Randbedingung minimiert wird, dass das globale Maximum (30) des Gesamtleistungsbedarfs und/oder der Gesamtleistungsrückspeisung minimal wird.

10. Managementverfahren nach einem der vorhegenden Ansprüche, **dadurch gekennzeichnet, dass** der Leistungsbedarf und/oder die Leistungsrückspeisung des wenigstens einen Anlagenteils (12) mittels eines selbstlernenden Algorithmus ermittelt und/oder analysiert wird.

11. Managementverfahren nach Anspruch 10, **dadurch gekennzeichnet, dass** Informationen über den Arbeitsablauf wenigstens eines Anlageteils (12) ermittelt und analysiert werden und wenigstens einem Anlagenteil (12) wenigstens ein Arbeitsablaufparameterbereich für wenigstens einen Arbeitsablaufparameter zugeordnet wird, innerhalb dessen sich das Anlagenteil (12) so verhält, dass ein in der Gesamtanlage (10) ablaufender Prozess durchführbar ist, und dass der selbstlernende Algorithmus wenigstens ein Anlagenteil (12) so steuert und/oder regelt, indem der selbstlernende Algorithmus wenigstens einen Arbeitsablaufparameter innerhalb des Arbeitsablaufparameterbereichs auswählt.

12. Managementverfahren nach einem der vorhergehenden Ansprüche, **dadurch gekennzeichnet, dass** der Gesamtleistungsbedarf so durch das wenigstens eine Anlagenteil (12) gesteuert und/oder geregelt wird, dass das wenigstens eine Anlagenteil (12) generatorisch wirkt.

13. Managementsystem zur Steuerung und/oder Regelung einer Spritzgießgesamtanlage zur Verarbeitung von Kunststoffen und anderer plastifizierbarer Massen mit wenigstens zwei mit einem Zwischenkreis (14) verbundenen Anlagenteilen (10),
**dadurch gekennzeichnet, dass** das Managementsystem zur Ausführung des Managementverfahrens nach einem der vorhergehenden Ansprüche eingerichtet ist.

## Claims

1. A management method for controlling an injection-moulding overall system for processing plastics and other plasticisable materials, comprising at least two system parts (12), which are connected to an intermediate circuit (14) and which each have a power demand and/or a power feedback, which, when summed, give a total power demand and/or a total power feedback of the overall system (10), wherein the power demand and/or the power feedback of at least two system parts (12) are determined and analysed in relation to one another and the total power demand and/or the total power feedback is then controlled, by controlling at least one system part (12), such that the total power demand and/or the total power feedback of the overall system (10), at least at one specific moment in time or within at least one specific time interval, is less than or equal to at least one predefined value (24), preferably is less than or equal to a greatest maximum of the power demand and/or the power feedback of the system part (12) that has the greatest maximum of the power demand and/or the power feedback at the at least one specific moment in time or within the at least one specific time interval, wherein the determination, the analysis and the control are performed by at least one system part (12), and wherein the at least one system part (12) controls at least itself, and wherein the power demands and/or the power feedbacks are determined online.

2. A management method in accordance with claim 1, **characterised in that** the total power demand and/or the total power feedback of the overall system (10), during at least one entire workflow, is less than or equal to the predefined value (24), preferably less than or equal to the greatest maximum of the power requirement and/or the power feedback of the system part (12) which has the greatest maximum of the power demand and/or the power feedback during the at least one entire workflow.

3. A management method in accordance with claim 1 or 2, **characterised in that** the power demand and/or the power feedback of the at least one system part (12) is controlled such that the total power demand and/or the total power feedback of the overall system (10), during at least one entire workflow, is less than or equal to the greatest maximum of the power requirement and/or the power feedback of the at least one system part (12) which has the greatest maximum of the power demand and/or the power feedback during the at least one entire workflow.

4. A management method in accordance with the preceding claims, **characterised in that** the total power demand and/or the total power feedback is controlled by controlling the at least one system part (12) by means of an adjustment of at least one workflow and/or at least one workflow parameter of the at least one system part (12).

5. A management method in accordance with the preceding claims, **characterised in that** the total power demand and/or the total power feedback is controlled, by controlling the at least one system part (12), such that at least one workflow of the at least one system part (12) is temporally adjusted.

6. A management method in accordance with claim 5, **characterised in that** the temporal adjustment is performed by a shifting of the start time of the workflow.

7. A management method in accordance with claim 6, **characterised in that** the shift is performed such that a global maximum (30) of the total power demand and/or the total power feedback is minimal.

8. A management method in accordance with claim 7, **characterised in that** the global maximum (30) of the total power demand and/or the total power feedback is minimised under the constraint that the total time of the workflows of the system parts (12) and/or the overall system (10) is minimal.

9. A management method in accordance with claims 6 to 8, **characterised in that** the shift is performed such that the total time of the workflows of the system parts (12) and/or the overall system (10) is minimised under the constraint that the global maximum (30) of the total power demand and/or the total power feedback is minimal.

10. A management method in accordance with the preceding claims, **characterised in that** the power demand and/or the power feedback of the at least one system part (12) is determined and/or analysed by means of a self-learning algorithm.

11. A management method in accordance with claim 10, **characterised in that** information relating to the workflow of at least one system part (12) is determined and analysed and at least one system part (12) is assigned at least one workflow parameter range for at least one workflow parameter, within which the system part (12) behaves such that a process taking place in the overall system (10) can be performed, and **in that** the self-learning algorithm controls at least one system part (12) as a result of the self-learning algorithm selecting at least one workflow parameter within the workflow parameter range.

12. A management method in accordance with the preceding claims, **characterised in that** the total power demand is controlled by the at least one system part (12) such that the at least one system part (12) acts regeneratively.

13. A management system for controlling an injection-moulding overall system for processing plastics and other plasticisable materials, comprising at least two system parts (10), which are connected to an intermediate circuit (14),
**characterised in that** the management system is configured to carry out the management method in accordance with the preceding claims.

## Revendications

1. Un procédé de gestion pour la commande et/ou le réglage d'une installation globale de moulage par injection pour la transformation de matières plastiques et d'autres masses plastifiables, comportant au moins deux parties d'installation (12) reliées par un circuit intermédiaire (14), qui présentent chacune la puissance requise et/ou une alimentation traversière de puissance qui, en s'ajoutant l'une à l'autre, donnent la puissance globale requise et/ou une alimentation traversière globale de puissance de l'installation globale (10),
dans laquelle la puissance requise et/ou l'alimentation traversière de puissance sont déterminés par au moins deux parties d'installation (12) et analysés l'un en relation avec l'autre et, suite à cela, la puissance globale requise et/ou l'alimentation traversière globale de puissance sont commandées et/ou réglées par commande et/ou réglage d'au moins une partie d'installation (12) de telle sorte que la puissance globale requise et/ou l'alimentation traversière globale de puissance de l'installation globale (10) soit, au moins à un instant déterminé ou pendant au moins un temps déterminé, inférieure ou égale à au moins une valeur prédéterminée (24), de préférence inférieure ou égale à un maximum de la puissance requise et/ou de l'alimentation traversière de puissance de la partie d'installation (12) qui présente à l'instant déterminé au moins ou pendant le temps déterminé au moins, le maximum de la puissance requise et/ou de l'alimentation traversière de puissance, dans lequel la détermination, l'analyse, le commande et/ou le réglage sont effectuée(s) par au moins une partie d'installation (12) et dans lequel la ou les partie(s) d'installation (12) se commande(nt) et/ou se règle(nt) au moins elle-même(s), et dans lequel la détermination des puissances requises et/ou des alimentations traversières de puissance s'effectue en ligne.

2. Procédé de gestion selon la revendication 1, **caractérisé en ce que** la puissance globale requise et/ou l'alimentation traversière globale de puissance de l'installation globale (10) est pendant au moins un cycle de travail complet inférieure ou égale à la valeur prédéterminée (24), de préférence inférieure ou égale au maximum de la puissance requise et/ou de l'alimentation traversière de puissance de la partie d'installation (12), qui présente pendant le ou les cycle(s) de travail complet(s), le maximum de la puissance requise et/ou de l'alimentation traversière de puissance.

3. Procédé de gestion selon la revendication 1 ou 2, **caractérisé en ce que** la puissance requise et/ou l'alimentation traversière de puissance de la ou des partie(s) d'installation (12) est commandée et/ou réglée de telle sorte que la puissance globale requise et/ou l'alimentation traversière globale de puissance de l'installation globale (10) soit, pendant au moins un cycle de travail complet, inférieur ou égal au maximum de la puissance requise et/ou de l'alimentation traversière de puissance de la ou des partie(s) d'installation (12), qui présente pendant le ou les cycle(s) de travail complet(s) le maximum de la puissance requise et/ou de l'alimentation traversière de puissance.

4. Procédé de gestion selon l'une des revendications précédentes, **caractérisé en ce que** le commande et/ou le réglage de la puissance globale requise et/ou de l'alimentation traversière globale de puissance s'effectue par commande et/ou réglage de la ou des partie(s) d'installation (12) au moyen d'une adaptation d'au moins un cycle de travail et/ou d'au moins un paramètre de cycle de travail de la ou des partie(s) d'installation (12).

5. Procédé de gestion selon l'une des revendications précédentes, **caractérisé en ce que** la puissance globale requise et/ou l'alimentation traversière globale de puissance est commandée et/ou réglée par commande et/ou réglage de la ou des partie(s) d'installation (12) de telle sorte qu'au moins un cycle de travail de la ou des partie(s) d'installation (12) soit adapté dans le temps.

6. Procédé de gestion selon la revendication 5, **caractérisé en ce que** l'adaptation dans le temps s'effectue par un déplacement de l'instant de démarrage du cycle de travail.

7. Procédé de gestion selon la revendication 6, **caractérisé en ce que** le déplacement s'effectue de telle sorte qu'un maximum global (30) de la puissance globale requise et/ou de l'alimentation traversière globale de puissance soit minimal.

8. Procédé de gestion selon la revendication 7, **caractérisé en ce que** la minimisation du maximum global (30) de la puissance globale requise et/ou de l'alimentation traversière globale de puissance s'effectue à la condition limite que la durée totale des cycles de travail des parties d'installation (12) et/ou de l'installation globale (10) soit minimale.

9. Procédé de gestion selon l'une des revendications 6 à 8, **caractérisé en ce que** le déplacement s'effectue de telle sorte que la durée globale des cycles de travail des parties d'installation (12) et/ou de l'installation globale (10) soit minimisée à la condition limite que le maximum global (30) de la puissance globale requise et/ou de l'alimentation traversière globale de puissance soit minimale.

10. Procédé de gestion selon l'une des revendications précédentes, **caractérisé en ce que** la puissance requise et/ou l'alimentation traversière de puissance de la ou des parties(s) d'installation (12) est déterminé et/ou analysé au moyen d'un algorithme auto-apprenant.

11. Procédé de gestion selon la revendication 10, **caractérisé en ce que** des informations sur le cycle de travail d'au moins une partie d'installation (12) sont obtenues et analysées et au moins un domaine de paramètres de cycle de travail pour au moins un paramètre de travail est associé à au moins une partie d'installation (12), à l'intérieur duquel la partie d'installation (12) se comporte de telle manière qu'une opération se déroulant dans l'installation globale (10) puisse être exécutée, et **en ce que** l'algorithme auto-apprenant commande et/ou règle au moins une partie d'installation (12) de telle sorte que l'algorithme auto-apprenant choisit au moins un paramètre de cycle de travail à l'intérieur du domaine de paramètres de cycle de travail.

12. Procédé de gestion selon l'une des revendications précédentes, **caractérisé en ce que** la puissance globale requise est commandée et/ou réglée par la ou les partie(s) d'installation (12) de telle sorte que la ou les partie(s) d'installation (12) devien(nen)t génératrice(s).

13. Système de gestion pour la commande et/ou le réglage d'une installation globale de moulage par injection pour la transformation de matières plastiques et d'autres masses plastifiables, comportant deux parties d'installation (12) reliées par un circuit intermédiaire (14), **caractérisé en ce que** le système de gestion est conçu pour la mise en oeuvre du procédé de gestion selon l'une des revendications précédentes.
